(19) Europäisches Patentamt
European Patent Office
Office européen des brevets

(11) **EP 3 771 068 A1**

(12) # EUROPEAN PATENT APPLICATION

(43) Date of publication:
**27.01.2021 Bulletin 2021/04**

(51) Int Cl.:
*H02J 7/02* (2016.01)  *B60L 53/10* (2019.01)
*B60L 53/14* (2019.01)

(21) Application number: **20187325.4**

(22) Date of filing: **23.07.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.07.2019 US 201962878584 P
02.01.2020 US 202062956384 P**

(71) Applicant: **Solaredge Technologies Ltd.
4673335 Herzeliya (IL)**

(72) Inventors:
• **ILIC, Milan
4673335 Herzeliya (IL)**

• **DASIKA, Jaya Deepti
4673335 Herzeliya (IL)**
• **FILIPPA, Mariano
4673335 Herzeliya (IL)**
• **YOSCOVICH, Ilan
4673335 Herzeliya (IL)**
• **HAR-SHAI, Liron
4673335 Herzeliya (IL)**
• **SELLA, Guy
4673335 Herzeliya (IL)**

(74) Representative: **V.O.
P.O. Box 87930
2508 DH Den Haag (NL)**

(54) **SYSTEM FOR BATTERY CHARGING**

(57)      A power converter (100) includes a conversion module (10-2, 10-3... 10-n). The conversion module (10-2, 10-3... 10-n) may operate in an active mode or in a bypass mode. In the active mode, the conversion module (10-2, 10-3... 10-n) may receive an input voltage and convert the input voltage to a fixed output voltage. In the bypass mode, the voltage across the output terminals of the conversion module (10-2, 10-3... 10-n) is at substantially zero volts. An adjustable conversion module (17) may convert input voltage to an adjustable output voltage (Vadj). The output terminals of the conversion module (10-2, 10-3... 10-n) and the output terminals of the adjustable conversion module (17) are connected in series to form a series string. A controller may selectively activate the conversion module (10-2, 10-3... 10-n) to be in the active mode or the bypass mode, and control the adjustable conversion module (17) responsive to at least one of a load voltage and a load current required by a load (19) connected across the series string.

Fig. 1

**Description**

**CROSS-REFERENCE TO RELATED APPLICATIONS**

This application claims priority to U.S. Provisional Patent Application No. 62/878,584, filed July 25, 2019, and to U.S. Provisional Patent Application No. 62/956,384, filed January 2, 2020. The entire disclosures of each of the foregoing applications are hereby incorporated by reference herein in their entireties.

**BACKGROUND**

Charging of batteries may depend on the type of battery to be charged. The type of battery may determine a suitable charging profile to provide a charge to a battery. The charge may come from a source having a constant voltage, a constant current and/or a combination of a constant voltage and a constant current (CVCC). Constant voltage may allow the full current of a charger to flow until a pre-set voltage level of the battery is established. After the pre-set voltage level is reached, the battery may remain connected to the charger.

**SUMMARY**

The following summary presents a simplified summary of certain features. The summary is not an extensive overview and is not intended to identify key or critical elements.
Illustrative embodiments disclosed herein may include a power system utilized to supply power to a load and/or a storage device. The power system may include various interconnections of groups of direct current (DC) power sources that may be connected in various series, parallel, series parallel and parallel series combinations, for example.
Illustrative examples disclosed herein may include ways to provide power to a storage device (e.g., a battery) in order to charge the storage device. The supply of voltage and current to a storage device may be provided by a converter. The converter may be operable to adjust the supply voltage and/or the supply current during charging of the storage device. The supply of voltage and current to the storage device may consider the present state of charge of the storage device. The present state of charge may be used as a criterion for the adjustment of the supply voltage and the supply current during the charging of the storage device.
The converter may include one or more fixed voltage conversion modules and one or more adjustable voltage conversion modules. Combining the output from one or more fixed conversion modules in series with an adjustable voltage module may allow processing a substantial portion of the total conversion power at high efficiency (e.g., using fixed conversion modules for part of the power) and enabling a wide output voltage range by use of an adjustable conversion module rated to handle part of the total converter power.
These and other features and advantages are described in greater detail below.

**BRIEF DESCRIPTION OF THE DRAWINGS**

Some features are shown by way of example, and not by limitation, in the accompanying drawings. In the drawings, like numerals reference similar elements.

Fig. 1 is a high level schematic depiction of a multi-charger unit comprising a fixed voltage conversion module and an adjustable conversion module according to illustrative aspects of the disclosure;
Fig. 2A schematically shows an exemplary multi-charger unit comprising a fixed voltage conversion module and an adjustable conversion module;
Fig. 2B schematically shows more details of a fixed voltage conversion module, according to illustrative aspects of the disclosure;
Fig. 2C schematically shows details of a converter, according to illustrative aspects of the disclosure;
Fig. 2D schematically shows more details of a converter which may be implemented for the converter shown in Fig. 2C, according to illustrative aspects of the disclosure;
Fig. 2E schematically shows a bi-directional bypass circuit implementation of a bypass unit shown in Figs. 2B, 2C, and 2D, according to illustrative aspects of the disclosure;
Fig. 3 shows a block diagram of further details of a control unit, according to illustrative aspects of the disclosure;
Fig. 4 shows a flow chart of a method, according to illustrative aspects of the disclosure; and
Fig. 5 depicts one implementation of the multi-charger unit;
Fig. 6 shows an example of use of the multi-charger unit of Fig. 1 for charging electric vehicles;
Fig. 7 shows another an example of use of the multi-charger unit of Fig. 1 for charging electric vehicles;
Fig. 8 shows a first example of a topology for an electric vehicle charging system as in the above example;

Fig. 9 shows the first example of the topology for the electric vehicle charging system in use;
Fig. 10 is a flow chart of one method of operation for power stage allocation in the electric vehicle charging station of Fig. 6;
Figs. 11A - 11D depict shows an electric vehicle charging station at various different times; and
Fig. 12 shows a graphical representation of a dynamic redistribution of power between the two charging bays in the electric vehicle charging station of Figs. 11A - 11D.

## DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

In the following description of various illustrative embodiments, reference is made to the accompanying drawings, which form a part hereof, and in which is shown, by way of illustration, various embodiments in which aspects of the disclosure may be practiced. It is to be understood that other embodiments may be utilized and structural and functional modifications may be made, without departing from the scope of the present disclosure.

Features of one or more aspects disclosed herein may be directed to a power converter which includes conversion modules operable in an active mode or a bypass mode. In the active mode, a fixed voltage conversion module may provide a substantially fixed output voltage (e. g., variation of less than 5% or less than 1 %) derived from a conversion of an input voltage at its input. Further, in the active mode, a fixed voltage conversion module may provide a substantially fixed output current (e.g., variation of less than 5% or less than 1%) derived from a conversion of an input voltage at its input, as a consequence of Ohm's law. In the bypass mode, one or more internal or external bypass switches may be selectively applied to the conversion module so that the conversion module is short circuited. According to some features, in the bypass mode, the conversion module switches may be operated to be short circuited. An additional, an adjustable conversion module may be controlled to convert an input voltage to a selectable voltage at its output terminals. A combined output voltage of the power converter may include the sum of a variable output voltage, and the output voltages of the fixed-voltage conversion modules, which may be the fixed output voltage or may be short circuited. The combined output voltage may therefore be responsive to a load voltage and/or a load current of a load connected to the power converter. The load voltage may be a predetermined voltage required by the load. The load current may be a predetermined current required by the load.

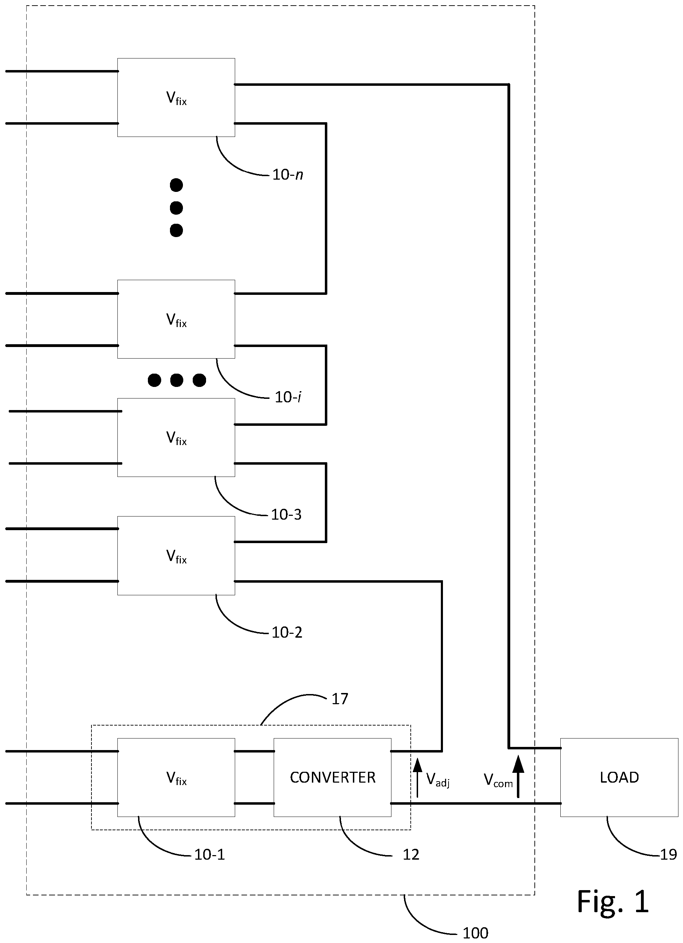

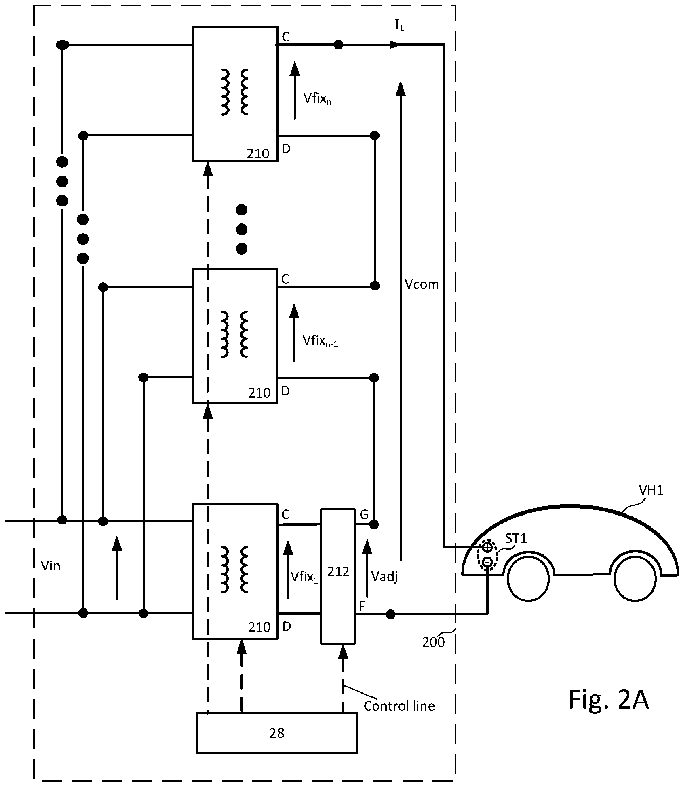

Reference is now made to Fig. 1, which is a high level schematic diagram of a multi-charger unit 100 (e.g., a power converter), according to aspects disclosed herein. The multi-charger unit 100 may comprise a first conversion module 10-1, which is operatively connected to an adjustable converter 12. The adjustable converter 12 may be one of a buck converter, a boost converter, a buck/boost converter, a boost /buck converter, a Flyback, Forward, Dual Active Bridge or other appropriate converter. An adjustable conversion module 17 may comprise the first conversion module 10-1 and adjustable converter 12. The adjustable conversion module 17 may include one or more conversion stages. The adjustable conversion module 17 may include a fixed conversion module 10-1 cascaded with an adjustable converter. The adjustable conversion module 17 may comprise an adjustable converter 12, without the first conversion module 10-1. The adjustable conversion module 17 may include galvanic isolation. The adjustable conversion module 17 may provide an adjustable amount of voltage to the multi-charger unit 100. In addition to the adjustable conversion module 17, the multi-charger unit 100 may comprise at least one fixed voltage conversion module 10-2, ... 10-*i*, ... 10-*n*. As will be explained below, any one or all of the at least one fixed voltage conversion module 10-2, ... 10-*i*, ... 10-*n* and the adjustable conversion module 17 may be selectively short circuited, thereby enabling a controller (not depicted) to provide an appropriate output voltage to a load 19. For example, a sensor in or connected to the multi-charger unit 100 may measure a voltage across the load 19 or measure a voltage related to voltage across the load 19, and selectively short circuit zero, one or more fixed voltage conversion modules and/or adjust voltage output by the adjustable conversion module 17 to match the total voltage output by the multi-charger unit 100 to the load voltage of the load 19. The load 19 may comprise a battery which is charged by the multi-charger unit 100. The load 19 may be a battery in an electric vehicle, or another electrical energy storage component in an electrical power system, such as a residential solar battery backup, a utility energy storage device, and/or the like. Each of the first conversion module 10-1 and the least one fixed voltage conversion module 10-2, ... 10-*i*, ... *10-n* is depicted as having an independent input (i.e., from a voltage source). Alternatively, and as will be described below with reference to Fig. 2A, there may be a single input to the multi-charger unit 100. Combinations of these two topologies may also be implemented. For example, the first conversion module 10-1 may have an independent input, and the least one fixed voltage conversion module 10-2, ... 10-*i*, ... 10-*n* may share a common input (see Fig. 2A). Other alternative topologies may be implemented, as will be apparent to one of skill in the art.

Accordingly, a combined voltage $V_{com}$ applied to the load 19 may be determined as follows:

$$V_{com} = V_{adj} + \sum_{i=1}^{n} V_i \qquad \text{EQN. 1}$$

EQN. 1 is a generalized equation where the fixed voltage conversion modules 10-2, ... 10-$i$, ... 10-$n$ provide different voltages one from another (as will be described in examples below). By way of example, one of the fixed voltage conversion modules 10-2, ... 10-$i$, ... 10-n may provide half of a load voltage, a second one of the fixed voltage conversion modules 10-2, ... 10-$i$, ... 10-$n$ may provide a quarter of the load voltage, a third one of the fixed voltage conversion modules 10-2, ... 10-$i$, ... 10-$n$ may provide still another portion of the load voltage, and so forth.

In cases where the fixed voltage conversion modules 10-2, ... 10-$i$, ... 10-$n$ provide the same voltage as each other, EQN. 1 may be written in a more specific fashion, as:

$$V_{com} = V_{adj} + n \sum_{1}^{n} V_{fix_n} \qquad \text{EQN. 2}$$

In EQN. 1 and EQN. 2, $V_{adj}$ denotes the output voltage of the adjustable conversion module 17, $V_i$ or $V_{fixn}$ denotes the voltage of each of the fixed voltage conversion modules 10-2, ... 10-$i$, ... 10-$n$, $n$ denotes a number of the fixed voltage conversion modules 10-2, ... 10-$i$, ... 10-$n$ (i.e., $n$ is a whole number) which are active to produce $V_{com}$, such as the fixed voltage conversion modules 10-2, ... 10-$i$, ... 10-$n$ which are not in bypass mode. The variable n may range from 0, if no fixed voltage conversion modules 10-2, ... 10-$i$, ... 10-$n$ are active, to the total number (n-1) of fixed voltage conversion modules 10-2, ... 10-$i$, ... 10-$n$. In a case where n = 0, the load 19 will receive a voltage determined by $V_{adj}$. $V_i$ or $V_{fixn}$ of each of the fixed voltage conversion modules 10-2, ... 10-$i$, ... 10-$n$ may be same as one another or different from one another.

By way of example, each of the fixed voltage conversion modules 10-2, ... 10-$i$, ... 10-$n$ (if active) may be configured to deliver a same voltage, for example 30 V. The adjustable conversion module 17 may be configured to deliver between 0 - 30 V. The load 19 may require 80 V (i.e., $V_{com}$ is equal to 80 V) from the multi-charger unit 100 to charge. In this example, two fixed voltage conversion modules, for example 10-$i$ and 10-$n$, may be active, providing 60 V. Other fixed voltage conversion modules of the fixed voltage conversion modules 10-2, ... 10-$i$, ... 10-$n$ may then be short circuited. The adjustable conversion module 17 may then be controlled to provide an additional 20 V, thereby producing a total output of 80 V from the multi-charger unit 100, which may be applied to the load 19.

In another example, some of the fixed voltage conversion modules 10-2, ... 10-$i$, ... *10-n* deliver different voltages than other of the fixed voltage conversion modules 10-2, ... 10-$i$, . 10-$n$ (as in the generalized EQN. 1). For example, the fixed voltage conversion modules 10-2, ... 10-$i$, ... 10-$n$ may provide a voltage as powers of twos: fixed voltage conversion module 10-2 may provide 2 V; fixed voltage conversion module 10-3 may provide 4 V; fixed voltage conversion module 10-4 may provide 8 V; fixed voltage conversion module 10-i may provide $2^i$ V; and fixed voltage conversion module 10-n may provide $2^n$ V. In such a case, in order to deliver the desired 80 V to the load 19, one fixed voltage conversion module which delivers 64 V and one fixed voltage conversion module which delivers 16 V may be active, thereby producing a total output of 80 V from the multi-charger unit 100, which may be applied to the load 19. In this case, the adjustable conversion module 17 and other inactive fixed voltage conversion modules may be short circuited.

In still another example, in order to deliver the desired 80 V to the load 19, one fixed voltage conversion module, by way of example, the fixed voltage conversion module 10-n, which delivers 64 V, and the adjustable conversion module 17 may be active and deliver 16 V. Remaining fixed voltage conversion modules may be short circuited.

As will be explained below in greater detail, voltage input to the first conversion module 10-1 and the fixed voltage conversion modules 10-2, ... 10-$i$, ... 10-$n$ is typically applied in parallel. According to aspects of the disclosure herein, inputs of fixed voltage conversion modules 10-2, ... 10-$i$, ... 10-$n$ may be connected in parallel to one power source. On the other hand, voltage output from the adjustable conversion module 17 and the fixed voltage conversion modules 10-2, ... 10-$i$, ... 10-$n$ is typically output in series, to increase the total output voltage provided by the fixed voltage conversion modules 10-2, ... 10-$i$, ... 10-$n$ and the adjustable conversion module 17.

Reference is made to Fig. 2A, which shows an exemplary multi-charger unit 200, according to illustrative aspects of the disclosure. The exemplary multi-charger unit 200 may be the same or similar to the multi-charger unit 100 of Fig. 1. The exemplary multi-charger unit 200 may include input terminals that provide input voltage $V_{in}$ to the inputs of one or more (e.g., two, three, four, five, ten, or in the general case, 'n') conversion modules 210 (three of which are depicted in Fig. 2A), where the inputs of the one or more conversion modules 210 may be connected in parallel. As discussed above, Fig. 2A depicts a single common input, i.e., from a voltage source. Alternative voltage input topologies, such as, but not limited to those described above, may also be implemented. The conversion modules 210 may be the same as or similar to the first conversion module 10-1 and the fixed voltage conversion modules 10-2, ... 10-$i$, ... 10-$n$ of Fig. 1. By way of example, the first conversion module 210 may correspond with the first conversion module 10-1 of Fig. 1. The next conversion module 210 may correspond with the second conversion module 10-2, of Fig. 1 the $i^{th}$ conversion module 210 may correspond with the conversion module 10-i of Fig. 1, and the nth conversion module 210 may correspond with the conversion module 10-n of Fig. 1.

In some aspects of the present disclosure, the input voltage $V_{in}$ may be a direct current (DC) voltage. Alternatively, in some aspects of the present disclosure, the input voltage $V_{in}$ may be an alternating current (AC) voltage provided from AC sources of power. Examples of AC power sources may be from wind turbines, utility grid supply, a generator, and/or the like. The DC input voltage $Vin$ may be, for example, sourced from battery banks, rectified wind turbines, photovoltaic solar panels or electrical power derived from generators, and/or the like.

In aspects of the present disclosure, output terminals C and D of multiple conversion modules 210 may be connected in series with each other and further in series with the output of the adjustable converter 212, which provides voltage Vadj. The adjustable converter 212 may be similar to or the same as the adjustable converter 12 of Fig. 1.

The input of the adjustable converter 212 may connect to the output terminal C and D of one conversion module 210, corresponding to first conversion module 10-1 of Fig. 1. According to some features, the adjustable converter 212 may provide both isolation between the converter input terminals and output terminals, and an adjustable output voltage (e.g., where the adjustable converter 212 is a Flyback, Forward, Dual Active Bridge or different type of converter). In this case, the input of the conversion module 210 may be the same as the input to the one or more fixed voltage conversion modules 10-2, ... 10-i, ... 10-n of Fig. 1. The output voltage Vadj of the adjustable converter 212 on terminal F may connect to a negative terminal (-) of a storage device ST1. The storage device ST1 may be a standalone battery, or, as in the example shown in Fig. 2A, may be included in a vehicle VH1. The positive terminal (+) of the storage device ST1 connects to the terminal C of the nth conversion module 210 in the series. Therefore, as noted above, the combined voltage Vcom applied to terminals + and - of the storage device ST1 is given by EQN. 1.

The conversion modules 210 may output a substantially identical voltage (for example, $V_{fixn} = Vfix_{n-1}$), or may output different voltage levels (for example, $V_{fixn} < Vfix_{n-1}$). The voltages $Vfix_n$, $Vfix_{n-1}$, and so forth, may be of a different voltage value based on the 'n' conversion modules 210 being operated differently from one another. The 'n' conversion modules 210 may, for example, be driven to convert at a different duty cycle. As another example, different conversion modules 210 may feature transformers having different windings ratios, and the different windings ratios may cause the different conversion modules to output different voltage levels.

A controller 28 may control and operate the adjustable converter 212 and one or more 'n' conversion modules 210 to provide an appropriate combined voltage $Vcom$ and a load current $I_L$ to the load VH1. The appropriate combined voltage Vcom and the load current $I_L$ supplied by the storage device ST1 may be responsive to a state of charge (SOC) of the storage device ST1 when, for example, the storage device ST1 is a battery, such as a Lithium ion battery or the like. The load current $I_L$ to the battery may be indicated by the battery rating in ampere hours (Ah), the SOC, the state of health, the available supply power, and/or the like.

As depicted in Figs. 1 and 2A, the multi-charger unit 100, 200 may connect to an electric vehicle (e.g., an electric car), in which case, the multi-charger unit 100, 200 provides current and voltage to an internal battery charging unit situated in the vehicle. Where the multi-charger unit 100, 200 is implemented as dedicated charger for a specific load, or is incorporated in the vehicle VH1, the multi-charger unit 100, 200 may also utilize an appropriate charging scheme for the type of battery to be charged. By way of example, the multi-charger unit 100, 200 may use constant voltage current charging for lead-acid batteries or lithium-ion batteries, or constant current charging for nickel-cadmium or nickel-metal hydride batteries. Additionally, depending on a particular battery's requirements, the multi-charger unit 100, 200 may be adapted to provide slow charging or quick charging.

The storage device ST1 is, by way of a non-limiting example, shown included in the vehicle VH1, but may also be a standalone storage device and may be connected to the exemplary multi-charger unit 200. The storage device ST1 may be, for example, a battery, a super capacitor, superconducting magnetic energy storage (SMES), a thermal energy storage system, and/or the like. The storage device ST1 may also include electro mechanical devices such as a flywheel energy storage device or a gravitational potential energy device for example. In descriptions which follow, switches may be incorporated into the conversion modules 210 and/or the adjustable converter 212.

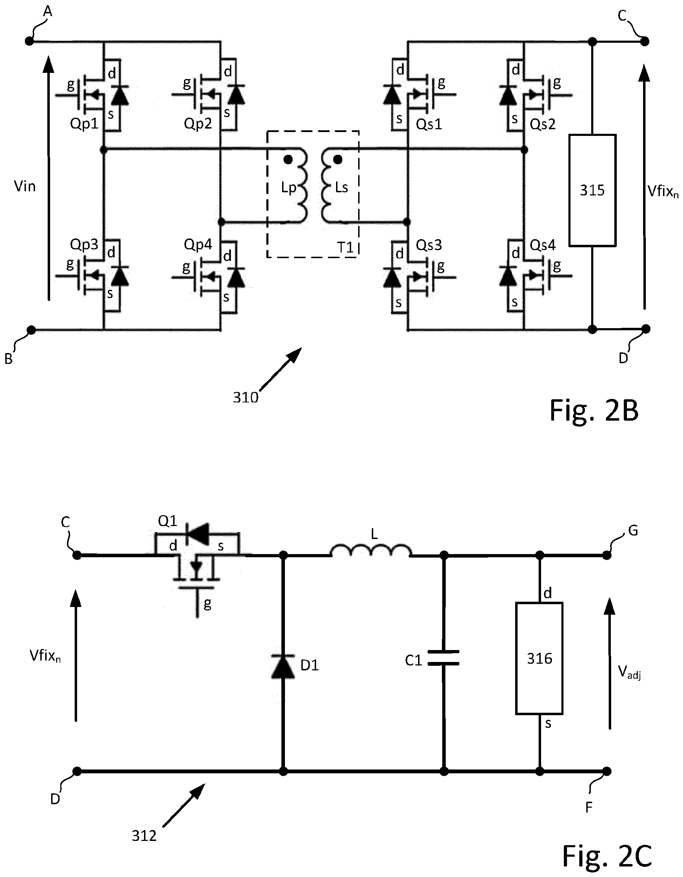

Reference is made to Fig. 2B, which shows one exemplary implementation of a conversion module 310 according to illustrative aspects of the disclosure. The conversion module 310 may be any one of the first conversion module 10-1, the fixed voltage conversion modules 10-2, ... 10-i, ... 10-n, or the conversion modules 210. The conversion module 310 is shown, in this illustrative example, as first and second full-bridge circuits galvanically isolated from each other by a transformer T1 which includes a primary winding Lp and a secondary winding Ls. The conversion module 310 may be implemented using different conversion circuits instead of full-bridge circuits, for example, half-bridge circuits.

The first full-bridge circuit may be provided at input terminals A and B. Provided across the input terminals A and B is input voltage Vin and two series connections of switches Qp1/ Qp3 and Qp2/ Qp4. The drains (d) of switches Qp1 and Qp2 connect to the terminal A and the sources (s) of Qp3 and Qp4 connect to the terminal B. A first terminal of the primary winding Lp connects to a first intermediate node between the source (s) of the switch Qp1 and the drain (d) of the switch Qp3. A second terminal of the primary winding Lp connects to a second intermediate node, between the source (s) of the switch Qp2 and the drain (d) of the switch Qp4.

The second full-bridge circuit may be provided at output terminals C and D. Connected across the output terminals C and D are output voltage $Vfix_n$ and two series connections of the switches Qs1/ Qs3 and Qs2/ Qs4. The drains (d) of the switches Qs1 and Qs2 connect to the terminal C and the sources (s) of Qs3 and Qs4 connect to the terminal D. A first terminal of the secondary winding Ls connects to an intermediate point between the source (s) of the switch Qs1 and the drain (d) of the switch Qs3. A second terminal of the secondary winding Ls connects to an intermediate point between source (s) of the switch Qs2 and the drain (d) of the switch Qs4. A bypass unit 315 may be connected across the terminals C and D to enable efficient bypassing the output of the conversion module 310 (e.g., substantially short-circuiting the output of the conversion module 310, such that the output voltage of the conversion module 310 is very low, for example, several millivolts or tens or hundreds of millivolts). According to some features, the switches Qs1/Qs3 and/or the switches Qs2/Qs4 may be turned ON to provide a low impedance bypass path between the terminals C and D when bypass of the conversion module 310 is desired. Auxiliary power for operating the bypass unit 315 may be provided from the input voltage Vin, from output voltage $Vfix_n$ and/or from a source of power external to the multi-charger unit 100 (Fig. 1). The source of external power may be from a utility grid for example, an auxiliary power supply, the DC source input, and/or the like.

The first and second full-bridge circuits may be bidirectional, i.e., may enable current flow from the terminals A and B to the terminals C and D (e.g., to enable charging of a battery connected between the terminals C and D), and may enable current flow from the terminals C and D to the terminals A and B (e.g., to enable discharging of a battery connected between the terminals C and D and charging of a battery connected between the terminals A and B). For example, where the input to the multi-charger unit 100 (Fig. 1) is a battery, the multi-charger unit 100 (Fig. 1) may facilitate charge transfer from one load battery (e.g., an electric vehicle) to another by first discharging a first battery to the battery at the input of the multi-charger unit 100 (Fig. 1), and then discharging the battery at the input of the multi-charger unit 100 (Fig. 1) to charge a second load battery (e.g., a second load vehicle).

Control signals from a control unit (such as the controller 28) applied to the gates (g) of switches in the circuit may apply a modulation scheme responsive to the electrical parameters sensed in multi-charger unit 100, such as a modulation scheme including pulse width modulation (PWM). A method executed by the control unit (such as the controller 28) may allow application of control signals to the gates (g) of the switches of the multi-charger unit 100 (Fig. 1). The control signals may be applied based on receiving an electrical parameter value from a sensor (such as a voltage sensors, a current sensor, a temperature sensor, and/or the like) of the method, such as where the electrical parameters in the multi-charger unit 100 (Fig. 1) connected to a load are received by the controller and logic/rules determine the operation of the converters, which may be the same as or similar to the conversion modules 10-1, ... 10-$i$, ... 10-$n$ of Fig. 1 and 210 of Fig. 2A, respectively. The response to sensed measurements may enable the DC voltage outputs Vadj, $Vfix_n$ and/or the load current $I_L$ to be set and maintained at desired levels, according to the load requirements.

Reference is now made to Fig. 2C, which shows details of a converter 312. The converter 310 of Fig. 2B and the converter 312 may be similar to one another, and / or the same or similar to the first conversion module 10-1 and the fixed voltage conversion module 10-2, ... 10-$i$, ... 10-$n$ of Fig. 1, as well as the conversion module 210 of Fig. 2A. Converter 312 is shown in this particular example as a buck converter receiving power on the input terminals C and D which may receive the output voltage $Vfix_n$ from the output of the conversion module 310 (for instance, first conversion module 10-1). The buck converter (also known as a step-down converter) is a DC-to-DC power converter which steps down an input voltage (such as $Vfix_n$, Vsource, and/or the like) across the input terminals C and D to a reduced voltage Vadj across output terminals G and F, and may convert input current flowing between the input terminals C and D to an increased current flowing between the output terminals G and F. Alternatively, a boost converter (not depicted) may be used for the converter 312 (also known as a step-up converter). A boost converter is a DC-to-DC power converter which steps up the voltage $Vfix_n$ at its input at the terminals C and D to a voltage Vadj at its output on terminals G and F, and accordingly may convert the input current flowing between the terminals C and D to a reduced current between the terminals G and F.

In a buck implementation of the converter 312, the input voltage $Vfix_n$ may be supplied across the terminals C and D. The drain (d) of a switch Q1 connects to the terminal C. The terminal D connects to the anode of a diode D1, one terminal of a capacitor C1 and the source (s) of a bypass unit 316. The cathode of the diode D1 connects to the source of the switch Q1 and one terminal of an inductor L. According to some features, the diode D1 may be replaced by an active switch (e.g., a MOSFET controlled to be ON when switch Q1 is OFF), a relay, and/or the like. The other terminal of the inductor L connects to the other terminal of the capacitor C1, the drain (d) of the bypass unit 316 and the terminal G. The bypass unit 316 may optionally be connected across terminals G and F. Auxiliary power for operating the bypass unit 316 may be provided by the input voltage Vin, by output voltage $Vfix_n$ and/or by a source of power external to the multi-charger unit 100 (Fig. 1). The source of power external to the multi-charger unit 100 (Fig. 1) may be power from a utility grid for example.

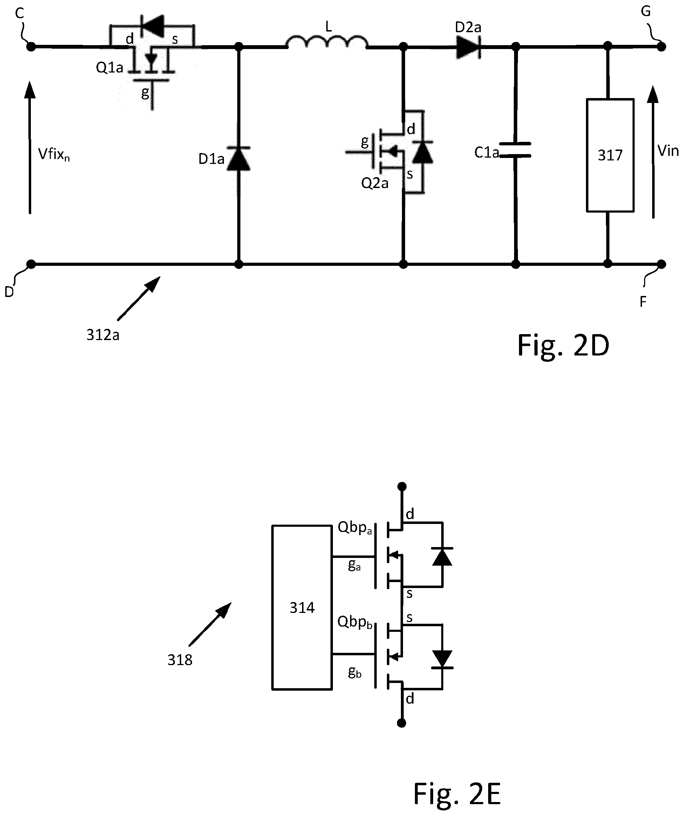

Reference is made to Fig. 2D, which shows additional details of a converter 312a which may be used as the converter 12 shown in Fig. 1 according to illustrative aspects of the disclosure. The converter 312a may be operated as a buck + boost converter topology which may be implemented and be included along with an operation of the first conversion modules 10-1 and the at least one fixed voltage conversion module 10-2, ... 10-$i$, ... 10-$n$ of Fig. 1 and the adjustable converter 12 of Fig. 1. Vfix$_n$ (or alternatively Vsource, Vin, and/or the like) may be applied across the terminals C and D. The drain (d) of a switch Q1a connects to the terminal C. The terminal D connects to the anode of a diode D1, one terminal of a capacitor C1a, the source of Q2a and the source (s) of a bypass unit 317. The cathode of a diode D1a connects to the source of the switch Q1a and one terminal of an inductor L. The other terminal of the inductor L connects to the drain (d) of the switch Q2a and the anode of the diode D2a. The cathode of D2a connects to the other terminal of the capacitor C1a, the drain of the bypass unit 317 and terminal G.

The bypass unit 317 may be connected across the terminals G and F with respective connections to the drain (d) and source (s) of the bypass unit 317. Auxiliary power for operating the bypass unit 317 may be provided by the input voltage Vin, output voltage Vfix$_n$ and/or a source of power external to the multi-charger unit 100 (Fig. 1). The source of power external to the multi-charger unit 100 (Fig. 1) may be power from a utility grid for example.

Reference is made to Fig. 2E, which shows a bi-directional bypass circuit implementation of a bypass unit 318 according to illustrative aspects of the disclosure. The bypass unit 318, the bypass unit 315 depicted in Fig. 2B, the bypass unit 316 depicted in Fig. 2C, and the bypass unit 317 depicted in Fig. 2D, may be implemented in the same or similar fashions. The bi-directional bypass circuit may include two switches Qbp$_a$ and Qbp$_b$ connected in a series connection so that the sources (s) of switches Qbp$_a$ and Qbp$_b$ are connected together. The drains (d) of switches Qbp$_a$ and Qbp$_b$ may connect to terminals G and F of converter 312 and 312a, by way of example. The drains (d) of switches Qbp$_a$ and Qbp$_b$ may also connect to terminals C and D of the first conversion module 10-1 and the at least one of the fixed voltage conversion modules 10-2, ... 10-$i$, ... 10-$n$ of Fig. 1, by way of example. An auxiliary power unit 314 may now supply power for the control of switches Qbp$_a$ and Qbp$_b$ via gates g$_a$ and g$_b$. The two switches Qbp$_a$ and Qbp$_b$ may be implemented with MOSFETs, or, alternatively, a different bypass switch or a relay may be used to implement the two switches Qbp$_a$ and Qbp$_b$.

The bi-directional bypass circuit may pass current in two directions such that the control of the switches Qbp$_a$ and Qbp$_b$ via gates g$_a$ and g$_b$, to give a first direction of current flow and a second direction of current flow. The first direction may be when the bi-directional bypass circuits are activated ON. The first direction may be from the terminal D to the terminal C or from the terminal F to the terminal G with reference to Figs. 2B, 2C, and 2D. The first direction may be due to the switch Qbp$_b$ being ON and current flowing through the body diode of the switch Qbp$_a$ with the switch Qbp$_a$ OFF, or the switch Qbp$_a$ being ON as well. A second direction of current flow when the bi-directional bypass circuits are activated ON may be from the terminal C to the terminal D or from the terminal G to the terminal F with reference to Figs. 2B, 2C, and 2D. The second direction may be due to the switch Qbp$_a$ ON and current flowing through the body diode of the switch Qbp$_b$ with the switch Qbp$_b$ OFF. The first direction of current flow may be used when the bypass unit 318 is activated ON to allow the storage device ST1 to be charged. The second direction of current flow may be used when the bypass unit 318 is activated ON and the storage device ST1 is being discharged for example. Further examples of the use of implementations of the bypass units 315, 316, 317, and 318 are described below.

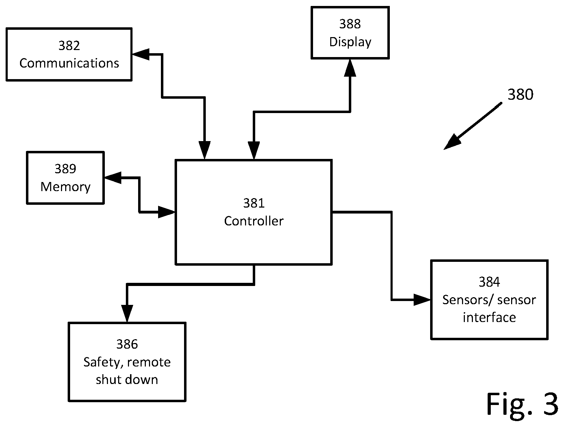

Reference is now made to Fig. 3 which shows a block diagram of further details of a control unit 380, according to illustrative aspects of the disclosure. The control unit 380 may be one possible implementation of the controller 28 of Fig. 1. A controller 381 may include a microprocessor, microcontroller and/or digital signal processor (DSP). The controller 381 may comprise dedicated hardware logic circuits, in the form of an application-specific integrated circuit (ASIC), field programmable gate array (FPGA), or full-custom integrated circuit, or a combination of such devices, which may connect to a memory device 389. The controller 381 may serve as a central controller to other similar controllers as the controller 381 which may be included in control of conversion modules 10 and the converters 12 for example. A communications interface 382 connected to the controller 381 may provide communications between the controller 381 and other controllers/ communication interfaces included in the multi charger unit 100 (Fig. 1) for example. The communications to and from the communications interface 382 may be as a result of a method executed by controller 381. The communications may include control signals provided on control lines (not explicitly depicted) that control, for example, the conversion modules 10, switches, (e.g. the switches Qbp$_a$ and Qbp$_b$ of the bypass unit 318), and/or the converter 12.

Communications in the communications interface 382 may also include transmission and/or reception (e.g., via a sensors/ sensor interface 384 which may be included in and/or operably connected to conversion modules 10 and/or converter 12) of measured or sensed parameter related to the operation of the conversion modules 10 and/or the converter 12. The communications over the communications interface 382 may be conveyed by use of wireless communications (e.g., WiFi ZigBee, cellular communications, Bluetooth and the like) and/or wired communications (e.g., power line communications (PLC), RS232/485 communication bus for example). The communications interface 382 may communicate with a local area network or cellular network in order to establish an internet connection. The internet connection for example may provide remote monitoring / or reconfiguration of the conversion module 210 (Fig. 2A) and the converter 12 for example.

A display 388 connected to the central controller 381 may be mounted on the surface of the housing used to house the multi-charger unit 100 (Fig. 1) for example. The display 388 may display for example the power produced from the conversion modules 10 and the converter 12. The power produced may be utilized by storages in general and/or the storage device ST1 of the vehicle VH1 which may be measured by the sensors/ sensor interface 384. Connected to the controller 381 may be connected to safety and a remote shutdown unit 386. Sensing by the sensors/ sensor interface 384 as well as sensed parameters communicated between controller 381 and sensors/ sensor interfaces of conversion modules 10 and the converter 12 may be indicative of a fault condition. Upon detection of the fault condition, the remote shutdown unit 386 may be activated in order to isolate the fault condition and/or shutdown the multi-charger unit 100 (Fig. 1).

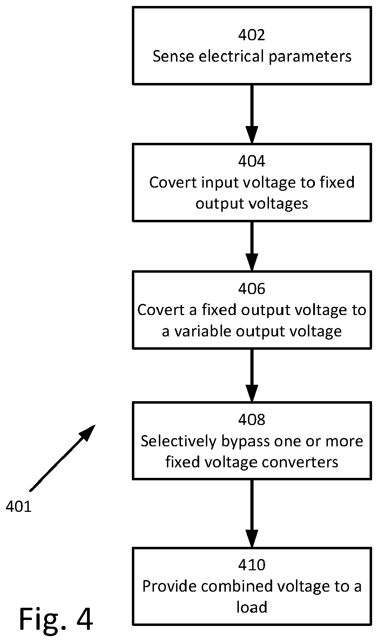

Reference is now made to Fig. 4 which shows a flow chart of a method 401, according to illustrative aspects of the disclosure. The method 401 may be applied, by way of non-limiting example, to the multi-charger unit 100 of Fig. 1 which may be connected to the storage device ST1. The storage device ST1 is assumed, for illustrative purposes, to be a battery connected to the multi-charger unit 100 for the purpose of charging the storage device ST1.

Under control of a method which may be executed by the control unit 28, at step 402, electrical parameters of the multi-charger unit 100 and the storage device ST1 may be sensed by the sensors / sensor interface 384. The electrical parameters may be sensed at step 402 when the storage device ST1 is connected to the multi-charger unit 100 with power (Vcom $\times$ $I_L$) being supplied to storage device ST1. The electrical parameters sensed may include current $I_L$, voltages Vadj, $Vfix_n$ for each 'n' and Vcom when the storage device ST1 is connected to the multi-charger unit 100. Step 402 may also include leaving the storage device ST1 disconnected for a period of time. After the period of time, a measurement of the open circuit voltage of the storage device ST1 may be made.

It is appreciated that steps 402-410 may be executed concurrently or in an order different from the example order shown above.

A look up table in the memory 389 may contain a list of open circuit voltages and a corresponding indication of the percentage (%) state of charge (SOC) of a storage device ST1 (a battery). The list may allow the control unit 28 to operate with the algorithm utilizing the value of the measurement to establish the state of charge (SOC) of the battery. The SOC may allow the determination of an appropriate charging regime for the battery prior to connecting the storage device ST1 to the multi-charger unit 100. A record of the state of charge (SOC) by counting coulombs may be made by the control unit of the storage device ST1 / the vehicle VH1. Prior to charging the storage device ST1, the record of the SOC may be transferred between the storage device ST1 / the vehicle VH1 and the control unit 28 wirelessly or by wired communications for example. The record may be included in the criteria used determine the appropriate charging regime for the battery prior to connecting the storage device ST1 to the multi-charger unit 100.

At step 404, the input voltage Vin to the 'n' conversion modules 10 may be converted to fixed output voltages $Vfix_n$ on the output terminals C and D of the conversion modules 10. The conversion ratio of the 'n' conversion modules 10 may be the same so that the fixed output voltages $Vfix_n$ on the output terminals C and D are substantially the same value as one another. Alternatively, the 'n' conversion modules 10 may be different from each other, or some of the 'n' conversion modules 10 may be the same as one another and others of the 'n' conversion modules 10 may be different from each other. The 'n' conversion modules 10 may be combined in an appropriate manner (see, for instance, the non-limiting examples provided above with reference to Fig. 1) in order to ensure that the correct power (Vcom $\times$ $I_L$) may be supplied to the storage device ST1 to charge the storage device ST1. The correct power (Vcom $\times$ $I_L$) supplied may be responsive to the sensing step 402 and the state of charge (SOC) of the storage device ST1. The 'n' conversion modules 10 may be operated in either an active mode or a bypass mode. In the active mode, the input voltage Vin to the conversion module 210 of Fig. 2A may be converted to a fixed output voltage $Vfix_n$ on the output terminals C and D with the bypass unit 315 OFF. In the bypass mode, input voltage Vin to the conversion module 210 may or may not be converted and the bypass unit 315 is ON so that the output on the output terminals C and D is substantially zero volts.

It is appreciated that the fixed output voltage discussed herein as being output by the fixed voltage conversion module 17 is actually a substantially fixed voltage, and may have a ripple or other variation of 5% - 10%, by way of example.

At step 406, the converter 212 on its input converts fixed output voltage Vfixi of the conversion module 210 to an adjustable voltage Vadj on the output of the converter 212 at the terminals G and F. Therefore, the combination of the conversion module 210 and the converter 212 may be controlled to give a variable output Vadj responsive to sensing step 402 and the state of charge (SOC) of the storage device ST1. Therefore, both steps 404 and 406 may be included in the control of the multi-charger unit 100 to ensure that the correct power (Vcom $\times$ $I_L$) may be supplied to the storage device ST1. The bypass unit 315 of the converter 212 and/or the bypass unit 315 of the conversion module 210 may similarly be operated in the active mode or the bypass mode described above with respect step 404. In the active mode, the bypass unit 315 is OFF and adjustable voltage Vadj is provided on the output of the converter 212 at the terminals G and F. In the bypass mode, the bypass unit 315 is ON and the voltage $Vfix_n$ is substantially zero volts on the output of one or more conversion modules 210 at the terminals C and D. At times, some conversion modules 210 may be in the active mode while other conversion modules 210 are in the bypass mode. As with step 404, in step 406, the input voltage Vin to the conversion module 210 and the converter 12 may or may be converted when the bypass unit 315 is ON in the bypass mode.

At step 408, the controller may control the bypass units to selectively bypass one or more fixed voltage conversion modules 210. For the example, in reference to FIG. 2A, the controller may turn on the bypass unit of the converter 212 and bypass the fixed voltage conversion module 210 connected to the converter 212, and thus Vadj is substantially zero volts. As another example, still in reference to FIG. 2A, the controller may turn on the bypass unit of the $n^{th}$ fixed voltage conversion module 210, and thus $Vfix_n$ is substantially zero volts.

At step 410, a combined voltage Vcom may be provided to storage device ST1:

$$Vcom = Vadj + \sum_{n=2}^{n} Vfix_n$$

The combined voltage Vcom is provided by connecting and controlling the voltages of the series string. The series string formed by the series connection of the output terminals C and D of the 'n' conversion modules 10 may be further connected in series with the output terminals G and F of the converter 12. In general, Vcom may be supplied to a load (e.g. the storage device ST1) substantially greater than or equal to the voltage required by the load responsive to the sensing step 402. Therefore, using two (n=2) isolated converters 10, the combined voltage Vcom may be the adjustable output voltage Vadj. Vcom = Vadj may be by bypassing the other n=2 the conversion module 210 with its respective bypass unit 315 ON (the bypass mode) so that $Vfix_2$ is substantially zero volts. The combined voltage Vcom may be the sum of the adjustable output voltage Vadj and the fixed output voltage $Vfix_2$. The sum may be because both the conversion module 210 and the conversion module 10/converter 12 are in the active mode where the bypass units 315 are OFF. The combined voltage Vcom may be voltage $Vfix_2$, Vcom = $Vfix_2$, by bypassing the other n=1 conversion module 10/converter 12 with their bypass units 315 ON (e.g., in the bypass modes). Bypass units 315 may be ON (e.g., in the bypass mode) so that Vadj is substantially zero volts.

Another possibility is for the 'n' conversion modules 10 each to convert at different conversion ratios, therefore the fixed output voltages $Vfix_n$ on the output terminals C and D may be of different values to each other. The conversion module 10/converter 12 may also be controlled with different conversion ratios. Therefore, the appropriate charging regime for a battery used to implement the storage device ST1 may be responsive to the sensing step 402. Being responsive to the step 402 may ensure that the correct power (Vcom $\times$ $I_L$) may be supplied to the storage device ST1 to charge the storage device ST1. Therefore, correct power (Vcom $\times$ $I_L$) may be supplied to the storage device ST1 instead of or in addition to the use of the bypass units 315 in the bypass mode of operating the conversion modules 10 and/or the converter 12.

By way of non-limiting example to illustrate the appropriate charging regime for a battery used to implement the storage device ST1 responsive to the sensing step 402. If n=3 and the voltage required by the storage device ST1 is 50 volts (V), if the conversion module 210 has $Vfix_n$ = 20V;

$$Vcom \geq 50V = Vadj + 20V + 20V$$

To satisfy *Vcom* to be greater or equal ($\geq$) to 50V, the output voltage of the converter 12 *Vadj* = 50V- 40V= 10V.

However, if each conversion module 210 has $Vfix_n$ = 45V, the bypass mode may be applied to one of the conversion modules 210, e.g., $Vfix_i \approx$ 0V by bypass 315 ON, so that for Vcom to be greater or equal ($\geq$) to 50V, output voltage of the converter 12 Vadj = 50V- 45V= 5V. Examples so far have shown the provision of a positive voltage value for the output voltage Vadj of the converter 12. However, additional circuitry, such as a full-bridge circuit, and/or a different wiring scheme may be added to the converter 12. Operation of the additional circuitry and/or the different wiring scheme may allow a negative polarity to be added in a series string of serially connected converter outputs to give the voltage Vcom required by a load. The negative polarity may be implemented by swapping over the terminals G and F. An example of the additional circuitry may include a double pole double throw switch (DPDT) component, associated circuit, relay, and/or the like. The DPDT switch or relay may be connected between the output of the converter 12 and the terminals G and F.

As another example, three conversion modules 10 may output at their respective outputs (on terminals C and D) $Vfix_2$ = 20V, $Vfix_3$ = 40v and $Vfix_4$ = 80V. Terminals C and D of the three conversion modules 10 are wired in series and further in series with terminals G and F of the converter 12. With respect to columns for $Vfix_2$ = 20V, $Vfix_3$ = 40v and $Vfix_4$ = 80V, the number of possible binary combinations of $Vfix_2$ = 20V, $Vfix_3$ = 40v and $Vfix_4$ = 80V are shown. A "Bypass" (substantially zero volts) entry in Table 1 indicates the operation of the conversion module 210 in the bypass mode. An "Active" mode entry in Table 1 for $Vfix_2$ = 20V, $Vfix_3$ = 40v and $Vfix_4$ = 80V indicates the active modes of conversion modules 10. Selection of which combinations of Vadj = -10V-0V-10V, $Vfix_2$ = 20V, $Vfix_3$ = 40v and $Vfix_4$ = 80V, is shown in the final column which indicates the combined voltage Vcom values. A possible exception in Table 1 is with respect to the first row to ensure that Vcom is between 0V and 10V, however, Vcom could be between -10V and 0V if required. The selection of which voltage combination (Vcom) value to be applied to a load may be according to method 401 described above.

**Table 1**

| Vfix$_1$/Vadj | Vfix$_2$ = 20V | Vfix$_3$ = 40V | Vfix$_4$ = 80V | $Vcom = \sum_{n=1}^{n=2} Vfix_n + Vadj$ |
|---|---|---|---|---|
| -10V-0V-10V | Bypass | Bypass | Bypass | 0-10V or -10-0V |
| -10V-0-10V | Bypass | Bypass | Active | 70-90V |
| -10V-0-10V | Bypass | Active | Bypass | 30-50V |
| -10V-0-10V | Bypass | Active | Active | 110-130V |
| -10V-0-10V | Active | Bypass | Bypass | 10-30V |
| -10V-0-10V | Active | Bypass | Active | 90-110V |
| -10V-0-10V | Active | Active | Bypass | 50-70V |
| -10V-0-10V | Active | Active | Active | 130-150V |

In some implementations, each fixed voltage conversion module may output the same voltage, for example, 100V. In this case, in a multi-charger unit 100 having, for example, four fixed voltage conversion modules (e.g. 10-1-10-*i* of Fig. 1) and a single adjustable conversion module 12 connected to one of the four fixed voltage conversion modules, certain voltage levels may be obtained in numerous ways. For example, if an output voltage of 290V is desired, two fixed voltage conversion modules (e.g., 10-2 and 10-3) are in the active mode and one fixed voltage conversion module (e.g. 10-*i*) may be in the bypass mode, and the fourth fixed voltage conversion module (e.g. 10-1) that is connected to the adjustable conversion module 12 is in the active mode. To avoid uneven wear on the fixed voltage conversion modules (e.g. 10-2, ... 10-*i*, ..., 10-*n*), the controller may cause the fixed voltage conversion modules (e.g. 10-2, ... 10-*i*, ..., 10-*n*) to be active in some sort of alternative fashion. For example, if the multi-charger unit 100 is repeatedly using two of the four fixed voltage conversion modules, as in the above example, the controller may rotate so that first fixed voltage conversion modules 10-2 and 10-3 will be used; then a next time, fixed voltage conversion modules 10-3 and 10-4 will be used; subsequently fixed voltage conversion modules 10-4 and 10-5 will be used, and then at a next charge, fixed voltage conversion modules 10-5 and 10-2 will be used. More complex usage schemes may be used as well, and the controller may also store an amount of time each of the first fixed voltage conversion modules 10-2, ... 10-*i*, ... 10-*n* are in use in memory 389, to further enhance load balancing.

In some implementations, the fixed voltage conversion modules, such as fixed voltage conversion modules 10-2, ... 10-*i*, ... 10-*n* of Fig. 1 and the adjustable conversion module 17 of Fig. 1 may be implemented on a single printed circuit board (PCB). The PCB may be provided with a first slot for a chip implementing a fixed voltage conversion module and a second slot for a chip implementing a converter, for instance converter 12. Accordingly, if the chip implementing a converter is present in the second slot, the PCB may comprise the adjustable conversion module 17 of Fig. 1. If the chip implementing a converter is not present in the second slot, the PCB may then comprise the fixed voltage conversion.

The efficiency of the multi-charger unit 100 is now discussed. As will be appreciated, the efficiency of the multi-charger unit 100 is dependent, at least in part, on the efficiency of its component fixed voltage conversion modules 10-2, ... 10-*i*, ... 10-*n* and the efficiency of its adjustable conversion module 17. By way of example, in an implementation where fixed voltage conversion modules 10-2, ... 10-*i*, ... 10-*n* output 50 V at 99% efficiency and the adjustable conversion module 17 may output between 0 - 50 V at 96% efficiency, the efficiency of the multi-charger unit 100 may be as tabulated in the Table 2, below.

| Vcom | Number of Fixed Voltage Conversion Modules | Multi-Charger Unit Efficiency |
|---|---|---|
| 0 - 50 | 1 | 0.9504 |
| 50 - 100 | 2 | 0.9702 |
| 100 - 150 | 3 | 0.9768 |
| 150 - 200 | 4 | 0.9801 |
| 200 - 250 | 5 | 0.9821 |

The efficiency of the multi-charger unit 100 when one fixed voltage conversion module is utilized is determined by multiplying the efficiency of the fixed voltage conversion modules 10-2, ... 10-*i*,... 10-*n* by the number of fixed voltage conversion modules which are actually used by the efficiency of the adjustable conversion module 17, in the present example, 0.99 * 1 * 0.96 = 0.9504. If two fixed voltage conversion modules are utilized, the efficiency of the multi-charger unit 100 is determined by first dividing the efficiency of the multi-charger unit 100 efficiency when one fixed voltage conversion module is utilized by the number of fixed voltage conversion module (two in the present case), i.e. 0.9504/2 = 0.4752. The efficiency of the fixed voltage conversion modules 10-2, ... 10-*i*, ... 10-*n* is divided by the number of fixed voltage conversion modules actually in use, which is then multiplied by the number of fixed voltage conversion modules minus one, i.e.: (0.99/2) * (2-1) = 0.4950. These two values are then added together to give the multi-charger unit efficiency for the case when two fixed voltage conversion modules: are used 0.4752 + 0.4950 = 0.9702. This calculation can be generalized to give the results mentioned in Table 2. Similarly, when different efficiency fixed voltage conversion modules 10-2, ... 10-*i*, ... 10-*n* and adjustable conversion module 17 are used, Table 2 may be recalculated appropriately.

$$\eta_{total} = \frac{N-1}{N} \cdot \eta_{fixed} + \frac{1}{N} \cdot \eta_{fixed} \cdot \eta_{adjustable}$$

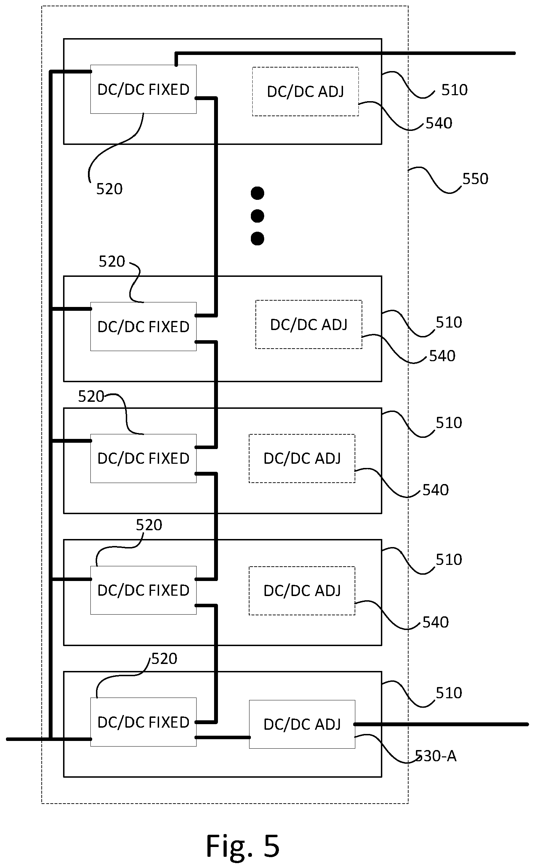

Reference is now made to Fig. 5, which depicts one implementation of the multi-charger unit. The multi-charger unit may be the same as or similar to the multi-charger unit 100 of Fig. 1, or the multi-charger unit 200 of Fig. 2A. At least one printed circuit board (PCB) 510 has a first integrated circuit 520, comprising a DC/DC fixed voltage conversion module. The DC/DC fixed voltage conversion module may comprise, for example, the conversion module 310 of Fig. 2B. Alternatively, other circuits, such as a half-bridge circuit, a buck converter, a boost converter, a boost-buck converter, a buck + boost converter, etc. may be used to implement the DC/DC fixed voltage conversion module of the first integrated circuit 520. One printed circuit board 510 has a second integrated circuit 530-A comprising an adjustable voltage DC/DC converter, which may be the same as or similar to the adjustable converter 12 of Fig. 1 or the adjustable converter 212 of Fig. 2A. The second integrated circuit 530-A comprising the adjustable voltage DC/DC converter may be one of a buck converter, a boost converter, a buck/boost converter, a boost /buck converter, a Flyback, Forward, Dual Active Bridge or other appropriate converter. Other PCBs 510 may comprise a slot 540 which is not used for the integrated circuit 530-A comprising the adjustable voltage DC/DC converter. As noted above, and shown in Fig. 5, inputs to the first integrated circuit 520 may be in parallel, while outputs are in series.

In some implementations, rather than utilizing a plurality of PCBs 510 to form the multi-charger unit, a single PCB 550 (indicated with as a dashed box) may house the various integrated circuits 520, 530-A and slots 540, as described herein above.

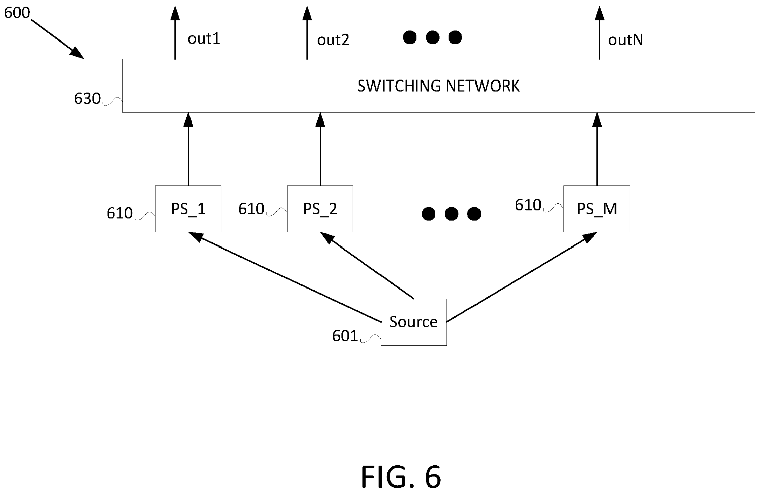

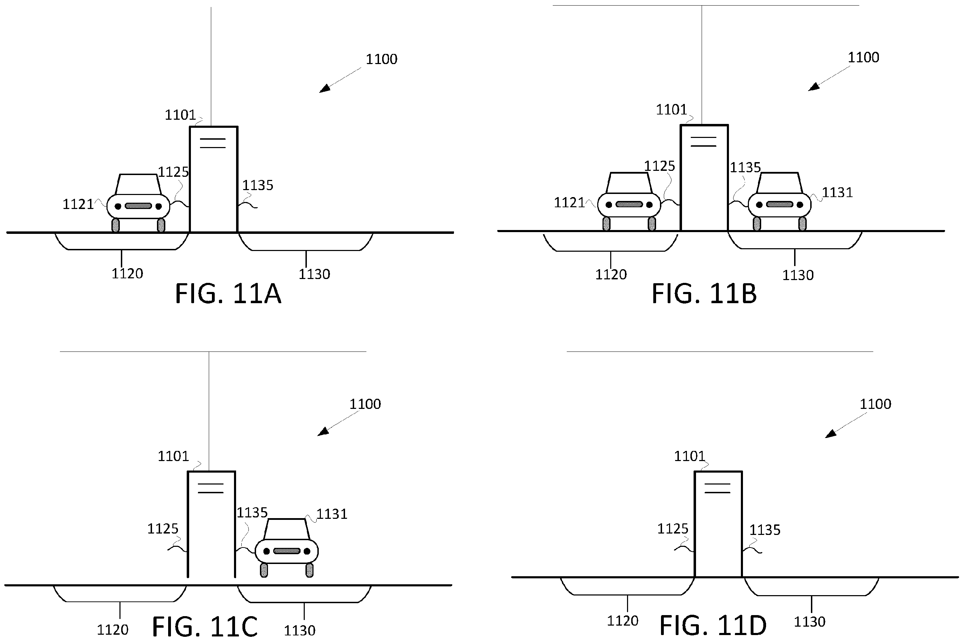

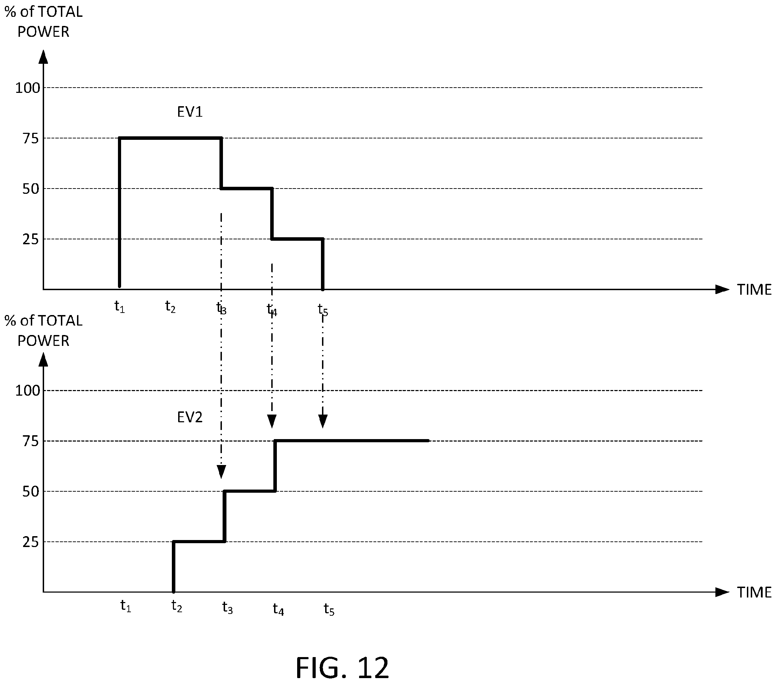

Reference is now made to Fig. 6, which shows one example system 600 of an implementation of the above disclosure. In this implementation, the multi-charger unit 100 incorporating the adjustable converter 12 of Fig. 1 or the adjustable converter 212 of Fig. 2A may be used to provide power to an electric vehicle charging station (as will be described below in detail with reference to Figs. 11 and 12). A power source, 601 inputs power into a plurality of power stages 610, designated as PS_1, PS_2, and more generally, PS_M (where M may be any natural number, and not just 13 (corresponding to the letter 'M')). The power source 601 may comprise one or more power sources, as appropriate. Each power stage 610 may receive power from one or more power sources 601. Each power stage 610 may be a multi-charger unit, which is the same as or similar to the multi-charger unit 100 of Fig. 1, or the multi-charger unit 200 of Fig. 2A. Each power stage 610 may output power into a switching network 630. The switching network may comprise a plurality of switches which may be opened or closed, as appropriate to provide power from between none of and all of the plurality of power stages 610 to an output of the switching network 630, designated as out1, out 2, ..., out N where N may be any natural number, and not just 14 (corresponding to the letter 'N')).

In the case where there are 'N' outputs, then the switching network 630 may provide power to up to N vehicles. By way of a first example, if there are 4 outputs from the switching network 630, then up to 4 cars may simultaneously receive power (i.e., recharge) from the switching network 630. Alternatively, if there are 4 outputs from the switching network 630, then up to 2 cars may simultaneously each receive twice as much power (i.e., recharge) from the switching network 630 as can be provided to one individual cars among four cars (assuming that each car receives an equal amount of power from the switching network 630).

It is appreciated that in Fig. 6, each arrow represents two wires, i.e., a wire conducting positive current and a wire conducting negative current.

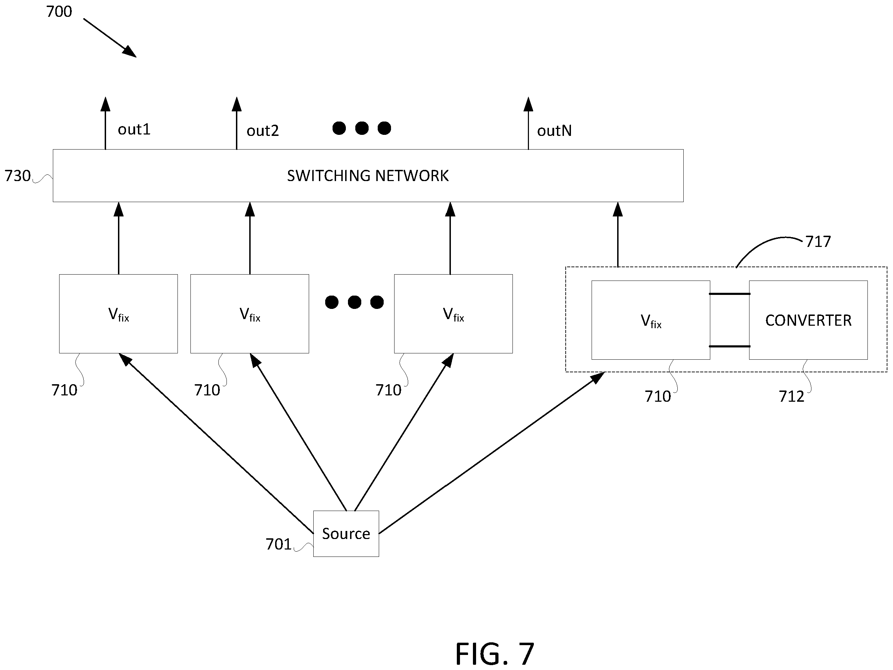

Reference is now made to Fig. 7, which shows another example system 700 of an implementation of the multi-charger unit 100 which incorporates the adjustable converter 12 of Fig. 1 or the adjustable converter 212 of Fig. 2A. A power source 701, which may be the same one or more power sources as power source 601 of Fig. 6 provides power for a plurality of fixed voltage converters 710 and an adjustable conversion module 717. The fixed voltage converters 710 may be the same or similar to the comprise at least one fixed voltage conversion module 10-2, ... 10-*i*, ... 10-*n* of Fig. 1. The adjustable conversion module 717 may comprise one fixed voltage conversion module 710 and an adjustable converter 712, similar to or the same as the adjustable converter 12 of Fig. 1. The plurality of fixed voltage converters 710 and the adjustable conversion module 717 may output power into a switching network 730, which may be the same or similar to switching network 630 of Fig. 6. More specifically, the switching network 730 may connect the plurality of fixed voltage converters 710 and the adjustable conversion module 717 in series. This series connection creates a plurality of sets, each set having one or more series connected fixed voltage converters 710, and one set which has the adjustable conversion module 717, and possibly at least one fixed voltage converters 710. If more than one adjustable conversion module 717 is attached to the switching network 730, then a number of sets of at least one fixed voltage converters 710, up to the number of adjustable conversion modules 717 attached to the switching network 730, may also comprise an adjustable conversion module 717. Each set may provide an output of power to a vehicle connected to the switching network 730, when the switching network 730 is disposed in a vehicle charging station, as will be discussed below, at least with reference to Figs. 11A-11D.

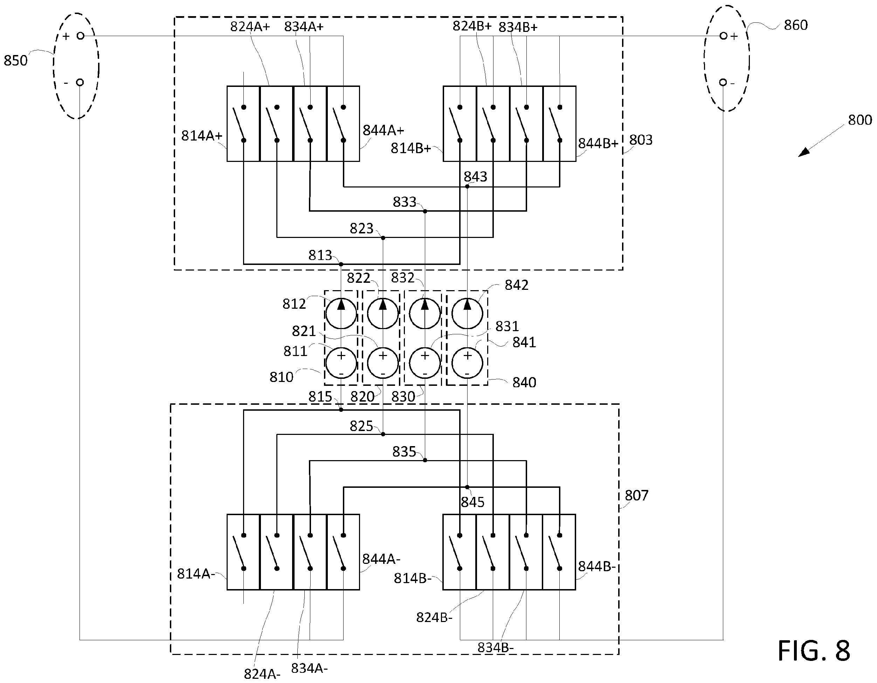

Reference is now made to Fig. 8, which shows a first example of a topology for a charging system 800, which may be used as the charging system 800, for example, as will be described below with reference to Figs, 11A - 11D, in the electric vehicle charging station 1100. More specifically, the charging system 800 may be used to provide power to the electrical charging point 1101 of Figs. 11A - 11D, and to enable reconfiguring the electrical charging point 1101 to provide an appropriate amount of power to each vehicle, as described in the discussion of Fig. 11A - 11D. By way of example, if the charging system 800 as implemented in the electric vehicle charging station 1100 of the sequence of Figs. 11A - 11D is used to provide, by way of example, peak power of 100 KW, as noted above, by utilizing the four power supplies, each of which, in the present example, is able to provide 25 KW. It is appreciated that if the four power supplies each provide more or less than 25 KW, the peak power will change accordingly. Furthermore, if each power supply of the four power supplies provides a different amount of power than each other of the power supplies, then their sum will be the peak power. For instance, if the four power supplies provide, respectively, 15 KW, 25 KW, 35 KW, and 45 KW, then the peak power will be 120 KW.

If the four power supplies each provide a same amount of power, e.g., $n$ KW, then, each combination of power supplies will, perforce, provide a multiple $n$ KWs. Alternatively, if the four power supplies each provide a different amount of power, e.g., $i$ KW, $j$ KW, $k$ KW, and $l$ KW. The combinations provided will, per force, be additive combinations of the power supplies. E.g.: $i + j$ KW, $j + l$ KW, $i + j + l$ KW, etc., up to a combination of peak power, $i + j + k + l$ KW. It is also appreciated that, for instance, two power supplies may provide a same amount of power, and two power supplies may each provide a different amount of power, such that peak power would be equal to $2i + j + k$ KW. Alternatively, two power supplies may provide a first same amount of power, and two other power supplies may provide a second same amount of power, i.e., $2i + 2j$ KW.

Turning now to Fig. 8, the four power supplies (which may alternatively be referred to as 'power stages') 810, 820, 830, 840 may comprise a battery, a photovoltaic array, or other appropriate power source (depicted here as an ideal voltage source in series with an ideal current source, so that arbitrary power levels may be set according to the controller, as described above, with reference to Fig. 7). The four power supplies are depicted here as each having a battery (i.e., a voltage source or voltage supply) 811, 821, 831, 841 and a current source 812, 822, 832, 842. Each of the four power supplies 810, 820, 830, 840 may be connected at either output to a switching network 803, 807. Specifically, and by way of example, first power supply 810 may be connected, via its positive terminal, at connection point 813 to a first set of two switches 814A+, 814B+. The first power supply 810 may be connected, via its negative terminal, at connection point 815 to a corresponding second set of two switches 814A-, 814B-. Each of the first set of two switches 814A+, 814B+ and the corresponding second set of two switches 814A-, 814B- may be controlled by at least one controller (not depicted in Fig. 8), which may be, by way of example, a processor, such as a microprocessor or a microcontroller. The processor may be a special purpose processor operative to perform a method for controlling the switches such as the first set of two switches 814A+, 814B+ and the corresponding second set of two switches 814A-, 814B-, and other methods described herein. Alternatively, the processor may be a general purpose processor. It is appreciated that the power supplies 810, 820, 830, 840 may be physically located together. Further, a heat sink (not depicted) may be disposed beneath the power supplies 810, 820, 830, 840, in order to disperse heat generated by the power supplies 810, 820, 830, 840 during operation.

A state of one of the first set of two switches 814A+, 814B+ may be mirrored by a state of a corresponding one of the corresponding second set of two switches 814A-, 814B-. For example, if switch 814A+ is open and 814B+ is closed, then corresponding switches 814A-is open and 814B- is closed. When one of the positives switches is closed its corresponding negative switch will be closed in order to complete a circuit comprising both switches.

Second power supply 820 may be connected, via its positive terminal, at connection point 823 to a third set of two switches 824A+, 824B+. The second power supply 820 may be connected, via its negative terminal, at connection point 825 to a fourth set of two switches 824A-, 824B-. Each of the third set of two switches 824A+, 824B+ and the fourth set of two switches 824A-, 824B- may be controlled by the at least one controller (not depicted in Fig. 8), which may be, by way of example, the processor.

Third power supply 830 may be connected, via its positive terminal, at connection point 833 to a fifth set of two switches 834A+, 834B+. The third power supply 830 may be connected, via its negative terminal, at connection point 835 to a sixth set of two switches 834A-, 834B-. Each of the fifth set of two switches 834A+, 834B+ and the sixth set of two switches 834A-, 834B- may be controlled by the at least one controller (not depicted in Fig. 8), which may be, by way of example, the processor.

Fourth power supply 840 may be connected, via its positive terminal, at connection point 843 to a seventh set of two switches 844A+, 844B+. The fourth power supply 840 may be connected, via its negative terminal, at connection point 845 to an eighth set of two switches 844A-, 844B-. Each of the seventh set of two switches 844A+, 844B+ and the eighth set of two switches 844A-, 844B- may be controlled by the at least one controller (not depicted in Fig. 8), which may be, by way of example, the processor.

A set of switches may be described as having an "A+ switch", an "A- switch", a "B+ switch" and a "B- switch", e.g., switches 834A+, 834A-, 834B+ and 834B- comprise a set of switches. Any given set of switches may have any of the states indicated in Table 1, below:

**TABLE 1**

| A+ Switch | A-Switch | B+ Switch | B-Switch |
|---|---|---|---|
| OPEN | OPEN | OPEN | OPEN |
| CLOSED | CLOSED | OPEN | OPEN |
| OPEN | OPEN | CLOSED | CLOSED |

It is appreciated that in the case where all four of the A+ switch, the A- switch, the B+ switch, and the B- switch are open, then no power is output to either of the terminals 850, 860. The switches 814A+, 824A+, 834A+, and 844A+ can connect any pair of power supplies 810, 820, 830, 840 in parallel, allowing additive power levels, as are the corresponding switches 814A-, 824A-, 834A-, and 844A-. Accordingly, a voltage and / or current applied to these switched by power supplies 810, 820, 830, 840 will additively combine and be output at positive and negative terminals 850. Similarly, the switches 814B+, 824B+, 834B+, and 844B+ are connected in parallel, as are the corresponding switches 814B-, 824B-, 834B-, and 844B-. Accordingly, a voltage and / or current applied to these switched by power supplies 810, 820, 830, 840 will additively combine and be output at positive and negative terminals 860.

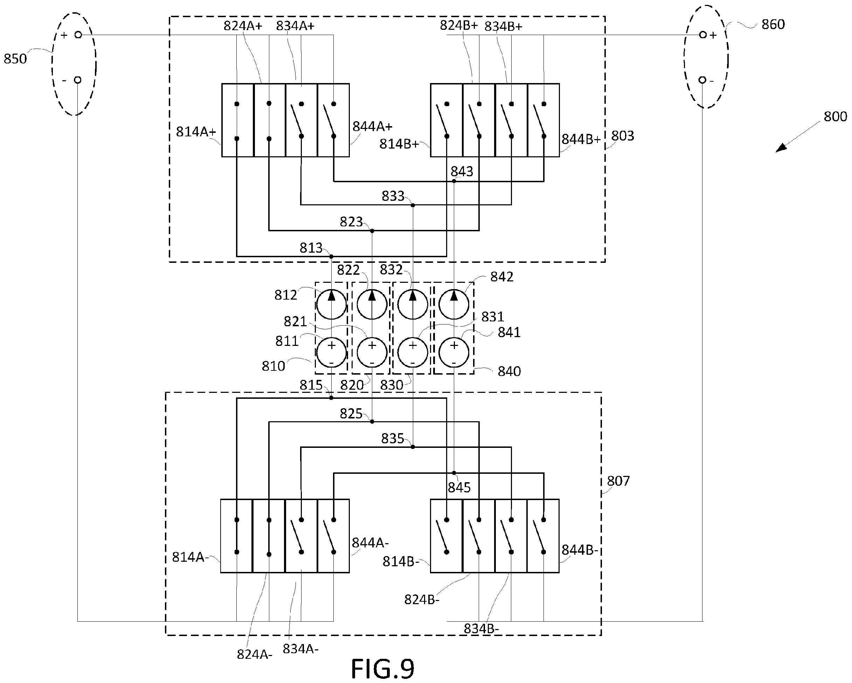

Reference is now made to Fig. 9, which shows one example configuration of Fig. 8, in which switches 814A+, 814A-, 824A+, 824A- are closed, while switches 814B+, 814B-, 824B+, 824B-, 834A+, 834A-, 844A+, and 844A- are open. Accordingly, if each of the power supplies 810, 820, 830, 840 provide 25KW, as in the example of Fig. 1, then 50KW is provided at terminal 850 and 0KW is provided at terminals 860. By way of a second example (not depicted), if switches 814A+, 814A-, 814B+, and 814B- are closed (and the remaining switches are open), then 25KW is provided at terminal 850 and 25KW is provided at terminals 860. If, by way of a third example (not depicted), power supplies 810, 840 provide 15KW and power supplies 820, 830 provide 25KW, and, for example, switches 814A+, 814A-, 824A+, and 824A-, 814B+, 814B-, 824B+, and 824B- are closed (and the remaining switches are open), then 40KW is provided at terminals 850 and 40KW is provided at terminals 860.

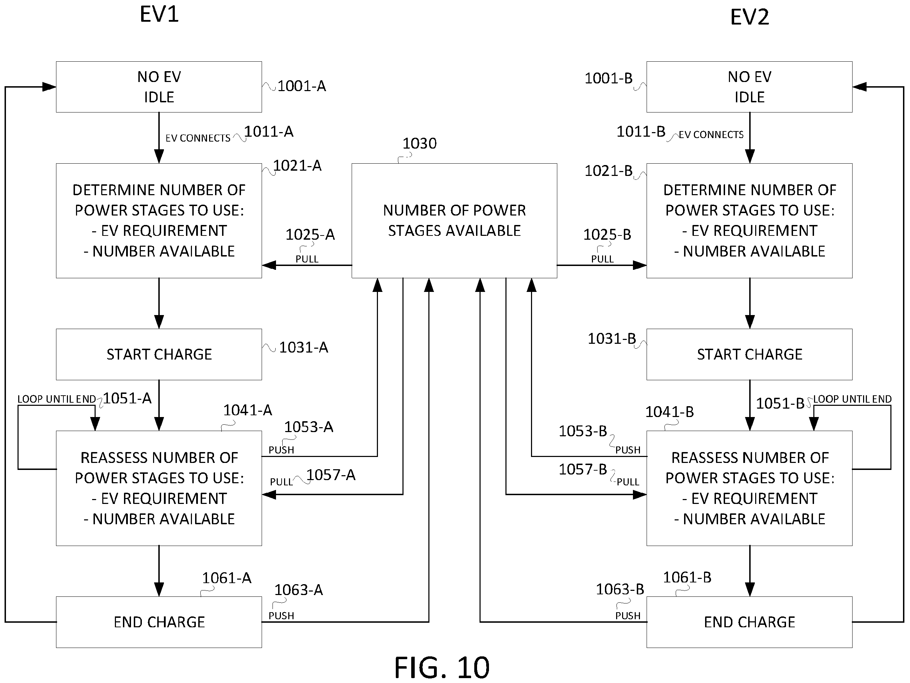

Reference is now made to Fig. 10, which is a flow chart of one method of operation for power stage allocation in the electric vehicle charging station of Figs. 11A-11D. In keeping with the above discussions of Fig. 6 - Fig. 9, for the purpose of the discussion of Fig. 10, it is assumed that the electric vehicle charging station 1100 of Figs. 11A-11D, and more specifically, the electrical charging point 1101 of Figs. 11A-11D has four power stages that can be allocated between two electric vehicles (e.g., the first electric vehicle 1121 and the second electric vehicle 1131 of Figs. 11A-11D). Other configurations of electric vehicle charging stations (such as the electric vehicle charging station of Figs. 11A-11D) and power stages can be extrapolated from the discussion herein.

At steps 1001-A and 1001-B, no electric vehicle is present to be charged at the electrical charging point 1101 of Fig. 11A-11D. At a first time (which may correspond with time $t_1$ of Fig. 12) first electric vehicle EV1 may connect (step 1011-A) to the electrical charging point (e.g., the electrical charging point 1101 of Figs. 11A-11D). When first electric vehicle EV1 connects at step 1011-A to the electrical charging point 1101 (Figs. 11A-11D), a first processor, which may comprise a microcontroller, may execute step 1021-A, and determine a number of power stages to use for charging the first electric vehicle EV1. For example, if the first electric vehicle EV1 requires 60 KW to charge, and four power stages of 25 KW are available (as will be accounted for by the processor in step 1030), then three of the four power stages (which may provide a total of 75 KW) may be taken by the first electric vehicle EV1 in a 'pull' fashion (step 1025-A). That is to say, the first electric vehicle EV1 takes ('pulls') the available pull stages as per its needs.

Once the number of power stages are allocated to charge the first electric vehicle EV1, at step 1031-A, the first electric vehicle EV1 begins charging.

At a later, second time (e.g., approximately coinciding with time $t_2$ of Fig. 12), a second electric vehicle EV2, for instance second electric vehicle 1131 (Figs. 11A-11D), second electric vehicle EV2 connects at step 1011-B to the electrical charging point 1101 (Figs. 11A-11D). A second processor, which may comprise a microcontroller, may execute step 1021-A, and determine a number of power stages to use for charging the second electric vehicle EV2. In some embodiments, the second processor may be disposed in the second electric vehicle 1131 (Figs. 11A-11D). In alternative embodiments, the second processor may be disposed in the electrical charging point 1101 (Figs. 11A-11D). In some embodiments, the first processor and the second processor may comprise the same processor.

At step 1021-B, depending on a number of remaining available power stages (as accounted for in step 1030, as described above), an amount of power, which will not exceed a maximum amount of power which can be provided by power stages available at any given time, will be provided to the second electric vehicle 1131 (Figs. 11A-11D). For example, if the second electric vehicle 1131 (Figs. 11A-11D) requires 35 KW to fully charge, but, as in the present example, where three of four power stages are already in use by the first electric vehicle 1121 (Figs. 11A-11D). Only 25 KW remain available for the second electric vehicle 1131 (Figs. 11A-11D), and the one remaining power stage may, accordingly, be provided to the second electric vehicle 1131 (Figs. 11A-11D). If, however, there are two available power stages, then both of the two available power stages may be provided to the second electric vehicle 1131 (Figs. 11A-11D). As noted above, with reference to step 1025-A, if there is a second processor in the second electric vehicle 1131 (Figs. 11A-11D), the second electric vehicle 1131 (Figs. 11A-11D) may pull (step 1025-B) the available power stages to the second electric vehicle 1131 (Figs. 11A-11D). Alternatively, if the second processor is disposed, for example, at the electrical charging point 1101 (Figs. 11A-11D), then the available power stages may be assigned to charge the second electric vehicle 1131 (Figs. 11A-11D) by the electrical charging point 1101 (Figs. 11A-11D). At step 1031-B, the second electric vehicle 1131 (Fig. 11) begins charging.

At steps 1041-A and 1041-B, the first processor and second processor may reassess the number of power stages provided to charge each of the first electric vehicle 1121 and the second electric vehicle 1131 (both of Figs. 11A-11D). In the example given above, it was stated that the first electric vehicle 1121 will, at step 1025-A be allocated three power stages. The remaining one power stage was, at step 1025-B, allocated to the second electric vehicle 1131. At some later time (which may correspond to time $t_3$ of Fig. 12), the first electric vehicle 1121 may be sufficiently charged so as to no longer require three power stages (e.g., two may now suffice). Accordingly, at step 1041-A, the one power stage which is not required by the first electric vehicle 1121 may now be returned to an "available pool" of power stages. The now available newly power stage may then, at step 1041-B be provided to the second electric vehicle 1131. Reassessing charging requirements and available power stages at any given time may be performed by both the first processor and the second processor in a repetitive (i.e., as a loop, as in steps 1051-A and 1051-B). Power stages which are no longer needed / become available will be 'pushed' (steps 1053-A and 1053-B) to the "available pool" and / or 'pulled' (steps 1057-A and 1057-B) to an electric vehicle requiring the power stage (for example, at time $t_4$ of Fig. 12, first electric vehicle EV1 'pushes' a no longer needed power stage back to the "available pool", and the newly freed-up power stage is correspondingly 'pulled' to second electric vehicle EV2).

By way of an example of a power stage being 'pushed', as in steps 1053-A and 1053-B, the power stage may be disconnected, via the switching network, from the electric vehicle (e.g., EV1) that no longer needs the power stage to provide power, such that the power stage may be released to the "available pool" of power stages that may be used to provide power for another electric vehicle (e.g., EV2).

By way of an example of a power stage being 'pulled', as in steps 1057-A and 1057-B, one (or more) power stage(s) from the "available pool" of available power stages may be connected, via the switching network, to an electric vehicle (e.g., EV1 or EV2), such that the power stage may now provide power to the electric vehicle.

At a still later time (corresponding to time $t_5$ of Fig. 12), first electric vehicle EV1 may be fully charged (step 1061-A), and push (step 1063-A) the power stages that first electric vehicle EV1 is still utilizing back to the "available pool" of power stages. At this stage, the first electric vehicle EV1 is no longer present to be charged at the electrical charging point 1101 of Figs. 11A-11D. The first charging point then returns to state 1001-A, i.e., no electric vehicle is present. Correspondingly, at another time, the second electric vehicle EV2 is fully charged (step 1061-B), and pushes 1063-B the power stages it is still utilizing back to the "available pool" of power stages. The second charging point then returns to state 1001-B, i.e., no electric vehicle is present.

By way of example of a described system for battery charging, reference is now made to Figs. 11A - 11D, which show a sequence of drawings depicting an electric vehicle charging station 1100 as various cars charge over time. The electric vehicle charging station 1100 may have an electrical charging point (or an electric vehicle charging point) 1101, which is disposed so as to effectively create two charging bays: charging bay 1120 and charging bay 1130. Each of the two charging bays 1120 and 1130 may have a cable 1125, 1135 which is provided to allow an electrical vehicle to attach to the electrical charging point 1101. At a first time, depicted in Fig. 11A, a first electric vehicle 1121 may occupy charging bay 1120, and may be attached to the electrical charging point 1101 via the cable 1125. By way of an example, the electric vehicle charging station 1100 may have four power supplies, each of which is able to provide 25 KW. Accordingly, the electric vehicle charging station 1100 may be able to provide peak power of 100 KW. If, by way of example, the first electric vehicle 1121 needs to receive 40KW from the electric vehicle charging point 1101, then it will require two power supplies of 25KW to provide 50 KW. At a second time, depicted in Fig. 11B, later than that depicted in Fig. 11A, a second electric vehicle 1131 arrives to charge at the electric vehicle charging station 1100. The second electric vehicle 1131 may occupy previously unoccupied charging bay 1130. The cable 1135 may connect between the second electric vehicle 1131 and the electrical charging point 1101. If, for example, the second electric vehicle 1131 requires 60 KW in order to charge, and, by now, first electric vehicle 1121 only requires 15 KW to fully charge, the electric vehicle charging point 1101 is able to reconfigure itself to provide 60 KW from three power supplies to the second electric vehicle 1131, and to reduce the first electric vehicle 1121 to receiving power from only one power supply.

At a third time, depicted in Fig. 11C, later than that depicted in Fig. 11B, the second electric vehicle 1131 may remain at the electric vehicle charging station 1100, still attached, via the cable 1135 to the electrical charging point 1101. The first electric vehicle 1121, having been fully charged, has departed from the electric vehicle charging station 1100, and is no longer seen in Fig. 11C. Finally, at a fourth time, the second electric vehicle 1131, having been fully charged, has departed from the electric vehicle charging station 1100, and is no longer seen in Fig. 11D.

Reference is now made to Fig. 12, which is a graphical representation of a dynamic redistribution of power, for example, between the two charging bays 1120, 1130 in the electric vehicle charging station 1100 of Figs. 11A - 11D. The top graph illustrates the power provided to an electrical vehicle (e.g., EV1), and the bottom graph illustrates the power provide to another electrical vehicle (e.g., EV2). Although two different time axes are shown, the time may be the same on the two graphs. Each graph has its own power axis, running from 0 to 100 KW (in keeping with the previous example). Even though each graph is described in these examples as running from 0 - 100KW, it is appreciated that each graph may be thought of as indicating a percentage of charging power available at the electric vehicle charging station 1100 which is provided to each electric vehicle. Thus, when (as will be detailed below) at time $t_3$ each of electric vehicles EV1 and EV2 may be receiving 50KW in the example, it would be equally accurate to say that of 100% power available to be provided by electric vehicle charging station 1100, EV1 is receiving up to 50% of the power available, and EV2 is receiving up to 50% of the power available.

At time $t_1$, a first electric vehicle EV1, for instance first electric vehicle 1121 (Fig. 11A - 11D), may begin to charge at the electrical charging point 1101 of the electric vehicle charging station 1100 of Fig. 11A - 11D. In the present example, the first electric vehicle EV1, needs 60 KW. Accordingly, three 25 KW (i.e. 75 KW) power stages may be provided to charge the first electric vehicle EV1. At time $t_2$, a second electric vehicle EV2, for instance second electric vehicle 1131 (Fig. 11A - 11D), may begin to charge at the electric vehicle charging station 1100 of Fig. 11A - 11D. Since the first electric vehicle EV1 is only using three of the power stages, a fourth power stage may be available and may be provided to charge second electric vehicle EV2. Accordingly, the top graph showing the power to charge EV1 over time indicates an amount of power provided to EV1 (e.g., 75 KW) remains constant at time $t_2$. Correspondingly, the bottom graph showing the power to charge EV2 over time indicates that EV2 is now receiving 25 KW of power at time $t_2$.

At time $t_3$, the first electric vehicle EV1 has partially charged, and accordingly, depending on a need to charge other electric vehicles at the electric vehicle charging station 1100 of Fig. 11A - 11D, the electric vehicle charging station 1100 may accordingly reallocate power stages to accommodate charging other such electric vehicles (e.g. EV2). By way of example, even though previously the electric vehicle charging station 1100 provided EV1 with three of the power stages, i.e., up to 75 KW, the electric vehicle charging station 1100 may now reduce the number of stages provide so as to provide 25 - 50 KW, i.e., to two charging stages. Accordingly, the first electric vehicle EV1 is now provided with 50 KW (i.e., two power stages), and one of the power stages which was allocated to the first electric vehicle EV1 is now available to be provided to charging the second electric vehicle EV2. A decision to reduce the number of power stages provided may be a business decision, e.g., the driver of EV2 may pay a premium to receive more charge, or if the electric vehicle charging station 1100 has a business relationship with the drivers of EV1 and EV2, the driver of EV2 may have a higher level service agreement than the driver of EV1. Alternatively, the decision to provide more power stages to EV2 at the expense of power stages provided to EV1 may be based on efficiencies - e.g., more customers may be serviced in less time if there is a periodic reallocation of power stages. Other appropriate methods and systems for reallocating charging stages at the electric vehicle charging station 1100 may be determined by a person of skill in the art.

At time $t_4$, the first electric vehicle EV1 has charged so that its charging needs are now less than 25 KW to charge (i.e., its charging needs are between 0 - 25 KW). Accordingly, the first electric vehicle EV1 may be provided with 25 KW (one power stage), and one of the power stages which was allocated to the first electric vehicle EV1 may be now available to be provided to charging the second electric vehicle EV2. At time $t_5$, the first electric vehicle EV1 may finish charging. Since the second electric vehicle EV2 does not need more power than it is already receiving, the fourth power stage is remains available for a third electric vehicle EV3.

The skilled person will appreciate that inventive aspects disclosed herein include a method or system as in any of the following clauses:

CLAUSES:

1. A power converter comprising at least one fixed voltage conversion module configured to operate in an active mode or in a bypass mode, and configured to receive an input voltage on first input terminals and to convert the input voltage to a substantially fixed output voltage on first output terminals when in the active mode, and to output substantially zero volts on the first output terminals when in the bypass mode, an adjustable conversion module configured to receive the input voltage on second input terminals and to convert the input voltage to an adjustable output voltage on second output terminals, wherein the first output terminals and the second output terminals are connected in series, and a combined output of the first output terminals and the second output terminals comprises an output at output terminals of the power converter, and a controller configured to activate the at least one fixed voltage conversion module responsive to at least one of a load voltage and a load current required by a load connected across the output terminals of the power converter, and to control the adjustable conversion module.

2. The power converter of clause 1, wherein the load voltage is a substantially constant voltage.

3. The power converter of clause 1 or clause 2, wherein the load current is a substantially constant current.

4. The power converter of any of the above clauses, wherein the load is a battery.

5. The power converter of any of the above clauses, wherein the first input terminals are galvanically isolated from the first output terminals.

6. The power converter of any of the above clauses, wherein the second input terminals are galvanically isolated from the second output terminals.

7. The power converter of any of the above clauses, wherein the load comprises at least one of: a super capacitor, a fly wheel, or a superconducting magnetic energy storage (SMES) system.

8. The power converter of any of the above clauses, wherein the controller is configured to selectively activate the at least one fixed voltage conversion module and to operate the adjustable conversion module to provide a combined voltage to the load, wherein the combined voltage comprises one of: the adjustable output voltage, the adjustable output voltage plus a whole number multiple of the fixed output voltage or a whole number multiple of the fixed output voltage.

9. The power converter of any of the above clauses, wherein the at least one fixed voltage conversion module includes a switch connected across the first output terminals, wherein the switch is turned on in the bypass mode and the switch is turned off in the active mode.

10. The power converter of any of the above clauses, wherein the at least one fixed voltage conversion module, the adjustable conversion module and the controller are operatively connected together and mounted in a housing.

11. The power converter of any of the above clauses, wherein the at least one fixed voltage conversion module comprises a plurality of fixed voltage conversion modules and each fixed voltage conversion module outputs a same voltage as each other of the plurality of fixed voltage conversion modules.

12. The power converter of any of the above clauses, wherein the at least one fixed voltage conversion module comprises a plurality of fixed voltage conversion modules and the at least one fixed voltage conversion module outputs a same voltage as at least one other of the plurality of fixed voltage conversion modules.

13. The power converter of any of the above clauses, wherein the at least one fixed voltage conversion module comprises a plurality of fixed voltage conversion modules and each one of the plurality of fixed voltage conversion modules outputs a different voltage.

14. The power converter of any of the above clauses wherein voltage output by the at least one fixed voltage conversion module is substantially a power of two.

15. A method for a power converter comprising a conversion module comprising first output terminals and first input terminals connected to an adjustable conversion module comprising second output terminals and second input terminals, wherein the first output terminals and the second output terminals are connected in series to form a series string, wherein first input terminals and the second input terminals are connectable to an input voltage, the method comprising sensing an electrical parameter of a load, converting the input voltage to the conversion modules to a fixed output voltage across the first output terminals, converting, using the adjustable conversion module, the input voltage to an adjustable voltage on the second output terminals and providing a combined series string voltage to the load.

16. The method of clause 15, wherein the providing the combined series string voltage comprises activating a switch connected across the first output terminals to be ON.

17. The method of clause 15 or clause 16, wherein activating provides a substantially zero voltage across the first output terminals.

18. The method of any of clauses 15 - 17, wherein the providing the combined series string voltage comprises activating a switch connected across the first output terminals to be ON, wherein the switch activated OFF provides the adjustable output voltage across the second output terminals.

19. The method of any of clauses 15 - 18, wherein activating provides a substantially zero voltage across the second output terminals.

20. The method of any of clauses 15 - 19, wherein the sensing is by a sensor operatively attached to the load, wherein the load is a battery and the combined series string voltage is responsive to a state of charge of the battery sensed by the sensor.

21. The method of any of clauses 15 - 20, wherein the first input terminals are galvanically isolated from the first output terminals.

22. The method of any of clauses 15 - 21, wherein the second input terminals are galvanically isolated from the second output terminals.

23. The method of any of clauses 15 - 22, wherein the load comprises at least one of: a super capacitor, a fly wheel, or superconducting magnetic energy storage (SMESs) or a battery.

24. The method of any of clauses 15 - 23, wherein the sensing is by not connecting the series string to the load.

25. The method of any of clauses 15 - 24, wherein the conversion module, the adjustable conversion module and a controller configured to control the conversion module and the adjustable conversion module are operatively connected together and mounted in a housing.

26. The method of any of clauses 15 - 25, wherein the combined series string voltage is substantially greater than or equal to the voltage required by the load responsive to the providing.

27. A power converter, comprising at least one conversion module, wherein the at least one conversion module is configured to operate in an active mode or in a bypass mode, wherein the at least one conversion module is configured to receive an input voltage on first input terminals and to convert the input voltage to a fixed output voltage on first output terminals when in the active mode, and to output substantially zero volts across the first output terminals when in the bypass mode, an adjustable conversion module configured to receive the input voltage on second input terminals and to convert the input voltage to an adjustable output voltage on second output terminals, wherein the first output terminals and the second output terminals are connected in series to form a series string; and a controller configured to selectively activate the at least one conversion module to be in the active mode or in the bypass mode, and to control the adjustable conversion module responsive to at least one of a load voltage and a load current.

28. The power converter of clause 27, wherein the first input terminals and the second input terminals are connected in parallel.

29. The power converter of clause 27 or clause 28, wherein the load voltage required is a constant voltage.

30. The power converter of any of clauses 27 - 29, wherein the load current required is a constant current.

31. The power converter of any of clauses 27 - 30, wherein the power converter comprises main output terminals configured to output a combined voltage of the first output terminals and the second output terminals.

32. The power converter of clauses 27 - 31, wherein the main output terminals are configured to be connected to a battery.

33. The power converter of any of clauses 27 - 32, further comprising a sensor operatively attached to the load.

34. The power converter of any of clauses 27 - 33, wherein the load is a battery.

35. The power converter of clause 34, wherein the load voltage is responsive to a state of charge of the battery sensed by a sensor.

36. The power converter of clause 34, wherein the load current is responsive to a state of charge of the battery sensed by a sensor.

37. The power converter of clause 34, wherein the controller is configured to selectively activate one or more of the at least one conversion module to provide a baseline voltage and to operate the adjustable conversion module to provide a combined voltage corresponding to a voltage of the battery.

38. The power converter of any of clauses 27 - 37, wherein the first input terminals are galvanically isolated from the second output terminals.

39. The power converter of any of clauses 27 - 38 wherein the second input terminals are galvanically isolated from the second output terminals.

40. The power converter of any of clauses 27 - 39 wherein the load comprises at least one of: a super capacitor; a fly wheel; a superconducting magnetic energy storage (SMES); or a battery.

41. The power converter of any of clauses 27 - 40, wherein the controller is configured to selectively activate at least one conversion module of the at least one conversion module and to operate the adjustable conversion module to provide a combined voltage to the load, wherein the combined voltage comprises one of: the adjustable output voltage, the adjustable output voltage plus the fixed output voltage or the fixed output voltage.

42. The power converter of any of clauses 27 - 41 wherein the at least one conversion module comprises at least one switch connected across the first output terminals, wherein the switch is activated ON in the bypass mode and activated OFF in the active mode.

43. The power converter of any of clauses 27 - 42, wherein the at least one switch is part of a power train of at least one conversion module.

44. The power converter of any of clauses 27 - 43, wherein the at least one conversion module, the adjustable conversion module and the controller are operatively connected together and mounted in a housing.

45. The power converter of any of clauses 27 - 44, wherein the at least one conversion module, the adjustable conversion module and the controller are disposed in a single housing.

46. A method comprising sensing an electrical parameter of a load, converting an input voltage input provided to at least one conversion module to a fixed output voltage on first output terminals of the at least one conversion module, converting an input voltage provided to an adjustable conversion module to an adjusted output voltage on second output terminals of the adjustable conversion module, wherein the first output terminals and the second output terminals are connected in series, thereby forming a series string, and providing a combined voltage to the load by connecting the series string to the load responsive to the sensing, wherein the providing comprises at least one of: providing the adjustable output voltage by bypassing at least one conversion module, providing the sum of the adjustable output voltage and the fixed output voltage or providing the fixed output voltage by bypassing the adjustable conversion module.

47. The method of clause 46, wherein the bypassing of the at least one conversion module is by activating a switch connected across the first output terminals to be ON.

48. The method of clause 46 or clause 47, wherein the activating the switch to be ON causes the at least one conversion module to provide a substantially zero voltage across the first output terminals.

49. The method of any of clauses 46 - 48, further comprising activating the at least one conversion module by setting a switch connected across the first output terminals to be OFF, thereby providing the fixed output voltage across the first output terminals.

50. The method of any of clauses 46 - 49, wherein the bypassing of the at least one conversion module is performed by setting a switch connected across the first output terminals to be OFF, wherein the switch being set OFF provides the adjustable output voltage across the second output terminals.

51. The method of any of clauses 46 - 50, wherein the load is a battery.

52. The method of any of clauses 46 - 51, and further comprising sensing is by a sensor, wherein the sensor operatively attached to the load.

53. The method of clause 52, wherein the load is a battery.

54. The method of clause 53, wherein the combined voltage is responsive to a state of charge of the battery sensed by the sensor.

55. The method of any of clauses 46 - 54, wherein first input terminals of the at least one conversion module are galvanically isolated from the first output terminals.

56. The method of any of clauses 46 - 55, wherein second input terminals of the adjustable conversion module are galvanically isolated from the second output terminals.

57. The method of any of clauses 46 - 56, wherein the load comprises at least one of: a super capacitor, a fly wheel, or superconducting magnetic energy storage (SMESs) or a battery.

58. The method of any of clauses 46 - 57, wherein the conversion module, the adjustable conversion module and a controller configured to control the conversion module and the adjustable conversion module are operatively connected together and mounted in a housing.

59. The method of any of clauses 46 - 58, wherein the combined voltage is greater than or equal to the voltage required by the load.

60. A voltage converter comprising input terminals configured to connect to a source voltage, a first output terminal configured to connect in series to an output terminal of a second voltage converter, a second output terminal configured to connect to a load, and a bypass circuit comprising a switch that establishes a short circuit between the output terminals, wherein the voltage converter comprises an active mode in which an output voltage is established between the first output terminal and the second output terminal, and a bypass mode in which the switch of the bypass circuit is closed, thereby disconnecting the source voltage.

61. The voltage converter of clause 60, wherein the output voltage comprises a substantially fixed voltage.

62. The voltage converter of clause 60, wherein the output voltage comprises a variable voltage.

63. The voltage converter of any of clauses 60 - 62, wherein the load comprises a battery.

64. The voltage converter of any of clauses 60 - 63, wherein the input terminals are galvanically isolated from the first output terminal and the second output terminal.

65. The voltage converter of any of clauses 60 - 64, wherein the load comprises at least one of one of: a super capacitor, a fly wheel, or a superconducting magnetic energy storage (SMES) system.

66. The voltage converter of any of clauses 60 - 65, wherein a controller actuates the switch, thereby causing voltage converter to be in either one of the active mode or the bypass mode.

67. The voltage converter of any of clauses 60 - 66, wherein the second voltage converter outputs a fixed voltage.

68. A system comprising at least two pairs of output terminals for outputting electrical energy, each of the at least two pairs of output terminals comprising a positive output terminal and a negative output terminal, a switching network for selectively delivering electrical energy to at least one pair of output terminals of the at least two pairs of output terminals at least two power stages, each of the at least two power stages comprising at least one power supply and one voltage supply, and a controller for controlling the switching network, wherein an output of the system comprises electrical energy output at at least one of the at least two pairs of output terminals.

69. The system of clause 68, wherein the switching network comprises a first switching network disposed between the at least two power stages and two positive terminals of the at least two pairs of output terminals and a second switching network disposed between the at least two power stages and two negative terminals of the at least two pairs of output terminals.

70. The system of any clauses 68 - 69, further comprising a heat sink disposed to conduct heat away from the at least two power stages.

71. The system of any of clauses 68 - 70, wherein electrical energy output at at least one of the at least two pairs of output terminals is used to charge a battery.

72. The system of clause 71, wherein the battery comprises a battery of an electrical vehicle.

73. The system of any of clauses 68 - 72, wherein the controller is operative to dynamically redistribute power among the at least two pairs of output terminals.

74. An apparatus comprising a first fixed conversion module configured to receive a first input voltage and to output a fixed output voltage; an adjustable conversion module configured to receive a second input voltage and to convert the second input voltage to an adjustable output voltage; and a controller configured to control the adjustable conversion module and the first fixed conversion module; wherein input nodes of the first fixed conversion module and of the adjustable conversion module are connected in parallel to one another at input terminals, and output nodes of the first fixed conversion module and of the adjustable conversion module are connected in series.

75. The apparatus of clause 74, wherein the adjustable conversion module comprises an adjustable converter.

76. The apparatus of clause 75, wherein the adjustable conversion module comprises a second fixed conversion module cascaded with the adjustable converter.

77. The apparatus of clauses 74 - 76, further comprising a third fixed conversion module, wherein input nodes of the first fixed conversion module and of the third fixed conversion module are connected in parallel to one another, and output nodes of the first fixed conversion module and of the third fixed conversion module are connected in series.

78. The apparatus of clauses 74 - 77, further comprising output terminals configured to provide an output voltage to a load, wherein the output voltage comprises a voltage formed by a serial connection of output nodes of the first fixed conversion module and of the adjustable conversion module.

79. The apparatus of clause 78, wherein the load comprises at least one of: a battery; a super capacitor, a fly wheel, or a superconducting magnetic energy storage (SMES) system.

80. The apparatus of clauses 74 - 79, wherein an output voltage of the apparatus is a substantially constant voltage.

81. The apparatus of clauses 74 - 79, wherein an output current of the apparatus is a substantially constant current.

82. The apparatus of clause 78, wherein the output terminals are galvanically isolated from the input terminals.

83. The apparatus of clause 82, wherein the input nodes of the first fixed conversion module are galvanically isolated from the output nodes of the first fixed conversion module, and the input nodes of the adjustable conversion module are galvanically isolated from the output nodes of the adjustable conversion module.

84. The apparatus of clauses 74 - 83, wherein the adjustable conversion module comprises a Flyback converter or a Forward converter.

85. The apparatus of clauses 77, wherein the adjustable conversion module comprises an isolating fixed voltage conversion module cascaded with a Buck converter.

86. The apparatus of clauses 74 - 85, wherein the first fixed conversion module comprises a Dual Active Bridge converter.

87. The apparatus of clauses 74 - 86, wherein the controller is configured to selectively operate the first fixed conversion module in an active mode or in a bypass mode.

88. The apparatus of clauses 74 - 87, further comprising a plurality of fixed conversion modules, wherein the controller is configured to selectively operate each of the plurality of fixed conversion modules in an active mode or in a bypass mode in order to output a load voltage.

89. A method comprising receiving a first input voltage at a first fixed conversion module, the first fixed conversion module configured to output a fixed output voltage; receiving a second input voltage at an adjustable conversion module configured to convert the second input voltage to an adjustable output voltage; and controlling the adjustable conversion module and the first fixed conversion module; wherein input nodes of the first fixed conversion module and of the adjustable conversion module are connected in parallel to one another at input terminals, and output nodes of the first fixed conversion module and the adjustable conversion module are connected in series.

90. The method of clause 89, wherein the adjustable conversion module comprises an adjustable converter.

91. The method of clause 90, wherein the adjustable conversion module comprises a second fixed conversion module cascaded with the adjustable converter.

92. The method of clauses 89 - 91, further comprising receiving a third input voltage at a third fixed conversion module, wherein input nodes of the first fixed conversion module and of the third fixed conversion module are connected in parallel to one another, and output nodes of the first fixed conversion module and of the third fixed conversion module are connected in series.

93. The method of clauses 89 - 92, further comprising providing an output voltage to a load at output terminals, wherein the output voltage comprises a voltage formed by a serial connection of output nodes of the first fixed conversion module and of the adjustable conversion module.

94. The method of clauses 89 - 93, wherein an output voltage to a load is a substantially constant voltage.

95. The method of clauses 89 - 94, wherein the output terminals are galvanically isolated from the input terminals.

96. The method of clauses 89 - 95, wherein the input nodes of the first fixed conversion module are galvanically isolated from the output nodes of the first fixed conversion module, and the input nodes of the adjustable conversion module are galvanically isolated from the output nodes of the adjustable conversion module.

97. The method of clauses 89 - 96, wherein the adjustable conversion module comprises an isolating fixed voltage conversion module cascaded with a Buck converter.

98. The method of clauses 89 - 97, further comprising selectively operating the first fixed conversion module in an active mode or in a bypass mode.

99. The method of clauses 89 - 98, further comprising selectively operating a plurality of fixed conversion modules by the controller, wherein the controller is configured to selectively operate each of the plurality of fixed conversion modules in an active mode or in a bypass mode in order to output a load voltage.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

**Claims**

1. An apparatus comprising:

   a first fixed conversion module configured to receive a first input voltage and to output a fixed output voltage;
   an adjustable conversion module configured to receive a second input voltage and to convert the second input voltage to an adjustable output voltage; and
   a controller configured to control the adjustable conversion module and the first fixed conversion module;
   wherein input nodes of the first fixed conversion module and of the adjustable conversion module are connected in parallel to one another at input terminals, and output nodes of the first fixed conversion module and of the adjustable conversion module are connected in series.

2. The apparatus of claim 1, wherein the adjustable conversion module comprises an adjustable converter.

3. The apparatus of claim 2, wherein the adjustable conversion module comprises a second fixed conversion module cascaded with the adjustable converter.

4. The apparatus of any of claims 1-3, further comprising a third fixed conversion module, wherein input nodes of the first fixed conversion module and of the third fixed conversion module are connected in parallel to one another, and output nodes of the first fixed conversion module and of the third fixed conversion module are connected in series.

5. The apparatus of any of claims 1-4, further comprising output terminals configured to provide an output voltage to a load, wherein the output voltage comprises a voltage formed by a serial connection of output nodes of the first fixed conversion module and of the adjustable conversion module.

6. The apparatus of claim 5, wherein the load comprises at least one of: a battery; a super capacitor, a fly wheel, or a superconducting magnetic energy storage, SMES, system.

7. The apparatus of any of claims 1-6, wherein an output voltage of the apparatus is a substantially constant voltage.

8. The apparatus of any of claims 5-7, wherein the output terminals are galvanically isolated from the input terminals.

9. The apparatus of claim 8, wherein the input nodes of the first fixed conversion module are galvanically isolated from the output nodes of the first fixed conversion module, and the input nodes of the adjustable conversion module are galvanically isolated from the output nodes of the adjustable conversion module.

10. The apparatus of any of claims 1-9, wherein the adjustable conversion module comprises a Flyback converter or a Forward converter.

11. The apparatus of claim 3, wherein the adjustable conversion module comprises an isolating fixed voltage conversion module cascaded with a Buck converter.

12. The apparatus of any of claims 1-11, wherein the first fixed conversion module comprises a Dual Active Bridge converter.

13. The apparatus of any of claims 1-12, wherein the controller is configured to selectively operate the first fixed conversion module in an active mode or in a bypass mode.

**14.** The apparatus of any of claims 1-13, further comprising a plurality of fixed conversion modules, wherein the controller is configured to selectively operate each of the plurality of fixed conversion modules in an active mode or in a bypass mode in order to output a load voltage.

**15.** A method comprising:

receiving a first input voltage at a first fixed conversion module, the first fixed conversion module configure to output a fixed output voltage;
receiving a second input voltage at an adjustable conversion module configured to convert the input voltage to an adjustable output voltage;
controlling the adjustable conversion module and the first fixed conversion module;
wherein the input nodes of the first fixed conversion module and of the adjustable conversion module are connected in parallel to one another at input terminals, and output nodes of the first fixed conversion module and the adjustable conversion module are connected in series.

Fig. 1

Fig. 2A

Fig. 2B

Fig. 2C

C

d ◄ s

Q1a

g

Vfix$_n$

D

312a

L

D1a

g    d

Q2a    s

D2a

C1a

317    Vin

G

F

Fig. 2D

318

314

Qbp$_a$

g$_a$

d

s

Qbp$_b$

g$_b$

s

d

Fig. 2E

| 388 Display |
|---|

| 382 Communications |
|---|

380

| 389 Memory |
|---|

| 381 Controller |
|---|

| 384 Sensors/ sensor interface |
|---|

| 386 Safety, remote shut down |
|---|

Fig. 3

```
┌─────────────────────────────┐
│            402              │
│  Sense electrical parameters│
└─────────────────────────────┘
              │
              ▼
┌─────────────────────────────┐
│            404              │
│   Covert input voltage to   │
│   fixed output voltages     │
└─────────────────────────────┘
              │
              ▼
┌─────────────────────────────┐
│            406              │
│ Covert a fixed output voltage│
│ to a variable output voltage│
└─────────────────────────────┘
              │
              ▼
┌─────────────────────────────┐
│            408              │
│ Selectively bypass one or more│
│   fixed voltage converters  │
└─────────────────────────────┘
              │
              ▼
┌─────────────────────────────┐
│            410              │
│  Provide combined voltage to│
│            a load           │
└─────────────────────────────┘
```

401

Fig. 4

Fig. 5

FIG. 6

FIG. 7

FIG. 8

EP 3 771 068 A1

FIG.9

EP 3 771 068 A1

EV1                                                                    EV2

```
┌─────────────────┐                              ┌─────────────────┐
│     NO EV       │  ⌇1001-A          1001-B⌇    │     NO EV       │
│     IDLE        │                              │     IDLE        │
└─────────────────┘                              └─────────────────┘
        │ EV CONNECTS ⌇1011-A        1011-B⌇ EV CONNECTS  │
        ▼                                              ▼
┌─────────────────┐  ⌇1021-A          1021-B⌇    ┌─────────────────┐
│ DETERMINE NUMBER OF │        1030          │ DETERMINE NUMBER OF │
│ POWER STAGES TO USE:│  ┌──────────────┐   │ POWER STAGES TO USE:│
│  - EV REQUIREMENT   │  │ NUMBER OF POWER │ │  - EV REQUIREMENT   │
│  - NUMBER AVAILABLE │◄─│ STAGES AVAILABLE │─►│  - NUMBER AVAILABLE │
└─────────────────┘ 1025-A└──────────────┘1025-B└─────────────────┘
                      PULL                  PULL
```

NO EV IDLE — 1001-A / 1001-B

EV CONNECTS — 1011-A / 1011-B

DETERMINE NUMBER OF POWER STAGES TO USE: - EV REQUIREMENT - NUMBER AVAILABLE — 1021-A / 1021-B

NUMBER OF POWER STAGES AVAILABLE — 1030

1025-A PULL    1025-B PULL

START CHARGE — 1031-A / 1031-B

LOOP UNTIL END 1051-A    1051-B LOOP UNTIL END

1041-A    1053-A PUSH    1041-B    1053-B PUSH

REASSESS NUMBER OF POWER STAGES TO USE: - EV REQUIREMENT - NUMBER AVAILABLE

PULL 1057-A    1057-B PULL

END CHARGE — 1061-A / 1061-B

1063-A PUSH    1063-B PUSH

FIG. 10

EP 3 771 068 A1

35

FIG. 11A

FIG. 11B

FIG. 11C

FIG. 11D

EP 3 771 068 A1

FIG. 12

Europäisches
Patentamt

European
Patent Office

Office européen
des brevets

**EUROPEAN SEARCH REPORT**

Application Number

EP 20 18 7325

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 337 023 A1 (DELTA ELECTRONICS SHANGHAI CO [CN]) 20 June 2018 (2018-06-20) | 1-9,11, 13-15 | INV. H02J7/02 B60L53/10 B60L53/14 |
| Y | * paragraphs [0005], [0017], [0037], [0038], [0040]; figure 2 * ----- | 10,12 | |
| Y | US 2016/261205 A1 (KOLAR JOHANN [CH] ET AL) 8 September 2016 (2016-09-08) * paragraphs [0204], [0207]; figures 31,32a * ----- | 10,12 | |

TECHNICAL FIELDS
SEARCHED      (IPC)

H02J
B60L
H02M

The present search report has been drawn up for all claims

| Place of search | Date of completion of the search | Examiner |
|---|---|---|
| Munich | 16 November 2020 | Varela Fraile, Pablo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 18 7325

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2020

| Patent document cited in search report | | Publication date | Patent family member(s) | | Publication date |
|---|---|---|---|---|---|
| EP  3337023 | A1 | 20-06-2018 | CN | 108206631  A | 26-06-2018 |
| | | | EP | 3337023  A1 | 20-06-2018 |
| | | | US | 2018175724  A1 | 21-06-2018 |
| US  2016261205 | A1 | 08-09-2016 | CN | 105939106  A | 14-09-2016 |
| | | | DE | 102016103828  A1 | 08-09-2016 |
| | | | KR | 20160108197  A | 19-09-2016 |
| | | | US | 2016261205  A1 | 08-09-2016 |

EPO FORM P0459

For more details about this annex : see Official Journal of the European Patent Office, No. 12/82

**EP 3 771 068 A1**

## REFERENCES CITED IN THE DESCRIPTION

### Patent documents cited in the description

- US 62878584

- US 62956384